# EUROPÄISCHE PATENTANMELDUNG

(11) **EP 4 549 091 A2**
(43) Veröffentlichungstag der Anmeldung: **07.05.2025**
(21) Anmeldenummer: 24211446.0
(22) Anmeldetag: 07.11.2024
(51) Int. Cl.: B24C 3/02

(54) **STRAHLEINHEIT FÜR EINE STRAHLVORRICHTUNG, INSBESONDERE DENTALSTRAHLVORRICHTUNG**

(30) Priorität: 12.09.2023 DE 102023124636; 31.01.2024 DE 102024102788
(71) Anmelder: Renfert GmbH, 78247 Hilzingen (DE)
(72) Erfinder: Goldhagen, Sven, 78315 Radolfzell (DE); Burgbacher, Tilo, 78239 Rielasingen (DE)
(74) Vertreter: Daub, Thomas

(57) **Zusammenfassung**

Die Erfindung geht aus von einer Strahleinheit (10a; 10c; 10d; 10e; 10f) für eine Strahlvorrichtung (12a) , insbesondere Dentalstrahlvorrichtung, welche zu einer Aufrauung einer Oberfläche eines, insbesondere dentalen, Werkstücks und/oder einer Apparatur (14a) vorgesehen ist, mit zumindest einem Düsenelement (16a; 16c; 16d; 16e; 16f), welches zu einem gezielten Ausbringen eines, insbesondere abrasiven, Strahls, insbesondere zu einem Innenstrahlen eines dentalen Werkstücks und/oder einer dentalen Apparatur (14a), vorgesehen ist.

Es wird vorgeschlagen, dass die Strahleinheit (10a; 10c; 10d; 10e; 10f) ein Tast- und/oder Abstandselement (18a; 18b; 18c; 18d; 18e; 18f) aufweist, welches zur Einhaltung eines Mindestabstands, zwischen einem, insbesondere dentalen, Werkstück und/oder einer Apparatur (14a) und dem zumindest eine Düsenelement (16a; 16c; 16d; 16e; 16f) vorgesehen ist.

## Beschreibung

### Stand der Technik

Die Erfindung betrifft eine Strahleinheit für eine Strahlvorrichtung, insbesondere für eine Dentalstrahlvorrichtung, nach dem Oberbegriff des Anspruchs 1.

Es sind Strahleinheiten für eine Strahlvorrichtung bekannt, welche zu einer Aufrauung einer Oberfläche eines, insbesondere dentalen, Werkstücks und/oder einer Apparatur vorgesehen sind, mit zumindest einem Düsenelement, welches zu einem gezielten Ausbringen eines, insbesondere abrasiven, Strahls, insbesondere zu einem Innenstrahlen eines dentalen Werkstücks und/oder einer dentalen Apparatur, vorgesehen sind.

Die Aufgabe der Erfindung besteht insbesondere darin, eine gattungsgemäße Vorrichtung mit verbesserten Eigenschaften hinsichtlich einer Einsatzsicherheit, einer Qualitätsüberwachung sowie einer Prozessdauer bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Strahleinheit für eine Strahlvorrichtung, insbesondere für eine Dentalstrahlvorrichtung, welche zu einer Aufrauung einer Oberfläche eines, insbesondere dentalen, Werkstücks und/oder einer Apparatur vorgesehen ist, mit zumindest einem Düsenelement, welches zu einem gezielten Ausbringen eines, insbesondere abrasiven, Strahls, insbesondere zu einem Innenstrahlen eines dentalen Werkstücks und/oder einer dentalen Apparatur, vorgesehen ist.

Es wird vorgeschlagen, dass die Strahleinheit für eine Strahlvorrichtung, insbesondere Dentalstrahlvorrichtung, ein Tast- und/oder Abstandselement aufweist, welches zur Einhaltung eines Mindestabstands, zwischen einem, insbesondere dentalen, Werkstück und/oder einer Apparatur und dem zumindest eine Düsenelement vorgesehen ist.

Unter einer "Strahleinheit" soll in diesem Zusammenhang insbesondere eine Einheit verstanden werden, welche zu einer Aufrauung einer Oberfläche eines, insbesondere dentalen, Werkstücks und/oder einer Apparatur vorgesehen ist. Insbesondere ist die Strahleinheit dazu vorgesehen eine Oberfläche, insbesondere Innenseite, des, insbesondere dentalen, Werkstücks und/oder einer Apparatur als Vorbereitung für eine Klebefläche aufzurauen. Vorzugsweise wird die Strahleinheit an einer Innenseite einer dentalen/prothetischen Restauration eingesetzt. Alternativ ist auch der Einsatz an anderen, einem Fachmann als sinnvoll erscheinenden dentalen Werkstücken denkbar. Vorzugsweise ist die Strahleinheit insbesondere mehrteilig ausgebildet. Alternativ ist auch eine einteilige Ausführung der Strahleinheit denkbar. Vorzugsweise wird die Bewegung der Strahleinheit insbesondere manuell gesteuert. Alternativ ist es denkbar das die Bewegung der Strahleinheit teilautomaisiert oder vollautomatisiert gesteuert wird. Die Strahleinheit ist insebsondere zu einer Erzeugung eines Strahls vorgesehen. Bevorzugt ist die Strahleinheit insbesondere von einem Handstück gebildet, das von einem Bediener zumindest teilweise während eines Betriebs geführt wird. Vorzugsweise umfasst die Strahleinheit zumindest ein Düsenelement, über welches zumindest teilweise während eines Betriebs Strahlgut, insbesondere ein Luft-Strahlgut-Gemisch, ausgestrahlt wird. Vorzugsweise ist das Handstück von einer Pistoleneinheit gebildet. Vorzugsweise ist das Düsenelement mittels eines Halteelements an der Pistoleneinheit der Strahleinheit befestigt ausgebildet. Vorzugsweise ist das Düsenelement mittels des Halteelements lösbar an einer Pistoleneinheit befestigt ausgebildet. Vorzugsweise ist das Halteelement dazu vorgesehen, unterschiedliche Ausführungen eines Düsenelements an der Pistoleneinheit zu befestigen. Alternativ wäre auch denkbar, dass das Halteelement und das Düsenelement einstückig ausgebildet sind. Die unterschiedlichen Düsenelemente sind an ihrer Koppelstelle mit der Pistoleneinheit konstruktionsgleich ausgebildet. Vorzugsweise weist das Halteelement eine Verbindungstelle mit der Pistoleneinheit auf. Vorzugsweise ist die Verbindungstelle als Schraubverbindung ausgebildet. Alternativ sind auch andere, einem Fachmann als sinnvoll erscheinende Ausführungen der Verbindungstelle denkbar. Vorzugsweise ist das Düsenelement über einen Kraftschluss und/oder Formschluss zumindest teilweise zwischen der Pistoleneinheit und dem Halteelement angeordnet. Beispielsweise ist das Halteelement insbesondere als Überwurfmutter ausgebildet.

Vorzugsweise weist die Strahleinheit eine variabele Einstellbarkeit des Austreffswinkels des Strahls der Strahleinheit auf der Bearbeitungsoberfläche auf. Vorzugsweise ist der Austreffwinkel insbesondere manuell steuerbar. Alternativ ist auch eine teilautomatisierte oder vollautomatisierte Steuerung des Auftreffwinkels denkbar. Vorzugsweise erzeugt die Strahleinheit einen Druck von vorzugsweise maximal 1 bar, bevorzugt zumindest 0,75 bar und besonders bevorzugt von zumindest 0,5 bar.

Es sind insbesondere Austreffswinkel zwischen 45° und 90° zu einer Oberfläche des Werkstücks vorteilhaft. Vorzugsweise ist insbesondere ein Winkel zwischen 70° und 90° vorteilhaft.

Unter einer "Strahlvorrichtung" soll in diesem Zusammenhang insbesondere eine Vorrichtung verstand werden, die zumindest eine Strahleinheit aufweist, welche zu einer Bearbeitung eines insbesondere dentalen, Werkstücks und/oder einer Apparatur vorgesehen ist. Die Strahlvorrichtung ist insbesondere zu einer Bearbeitung eines, insbesondere dentalen, Werkstücks und/oder einer Apparatur mittels eines Strahlprozesses vorgesehen. Die Strahlvorrichtung ist insbesondere zu einem Ausstrahlen von Strahlgut, insbesondere aus einem Strahlguttank, bevorzugt in einer Strahlkammer vorgesehen. Vorzugsweise wird das Strahlgut über die Strahleinheit ausgestrahlt. Besonders bevorzugt ist die Strahlvorrichtung zu einer Oberflächenbearbeitung von, insbesondere dentalen, Werkstücken und/oder Apparaturen mittels eines Luft-Strahlgut-Gemischs vorgesehen. Dabei soll unter einem "Strahlgut" insbesondere ein abrassives Material verstanden werden, das pulverförmig und/oder feinkörnig ist und das dazu vorgesehen ist, eine Oberfläche eines Werkstücks und/oder einer Apparatur beim Auftreffen abzutragen und/oder zu verdichten. Für das Strahlgut sind insbesondere Korngrößen im Bereich von 50 µm bei einem Druck von 0,5 bar vorteilhaft. Das Strahlgut kann vorteilhaft aus Aluminiumoxid bestehen. Es sind jedoch auch andere einem als sinnvoll erscheinende Materialien und Korngrößen denkbar. Ferner soll in diesem Zusammenhang unter einer "Strahlkammer" insbesondere eine Kammer verstanden werden, in welcher das Strahlgut in zumindest einem Betriebszustand austrittt. Vorzugsweise soll darunter insbesondere eine Kammer verstanden werden, welche in zumindest einem Zustand zumindest im Wesentlichen abgeschlossen ist. Besonders bevorzugt soll darunter insbesondere eine Betriebskammer verstanden werden, welche einen Arbeitsbereich eines Bedieners definiert und dazu vorgesehen ist, ein unkontrolliertes Umherfliegen von Strahlgut zu verhindern. Vorzugsweise ist die Strahlvorrichtung mehrteilig ausgebildet. Vorzugsweise weist die Strahlvorrichtung eine Reinigungs- und Desinfektionseinheit auf, welche zu einer Reinigung und Desinfektion einerBearbeitungsfläche eingesetzt wird. Vorzugsweise ist die eine Reinigungs- und Desinfektionseinheit in einem Nahbereich der Strahleinheit angeordnet. Beispielsweise ist die Reinigungs- und Desinfektionseinheit als UV-Lampe und/oder Absaugeinheit und/oder Sprüheinheit ausgebildet. Alternativ sind auch alle anderen, einem Fachmann als sinnvoll erschneinenden Auführungen einer Reinigungs- und Desinfektionseinheit denkbar.

Für die Erzeugung des Luft-Strahlgut-Gemischs sind bereits verschiedene Test- und Anwendungsverfahren bekannt wie beispielsweise mittels einer Mischkammer oder mittels einer Mischkammer mit Rüttelprinzip.

Ein Mischkammerprinzip ist beispielsweise aus der EP 0 314 022 B1 bekannt. Das Mischsystem besteht aus einem Mischraum mit einem Druckein- und -ausgang und mit einem Druckbehälter, in dem sich das Strahlmittel befindet. Am Druckeingang wird die bauseitige Druckluftleitung angeschlossen, am Druckausgang wird das Luft-Strahlgut-Gemisch mit der Strahleinheit entnommen. An der Schnittstelle zwischen dem Mischraum und der Druckbehälter befindet sich insbesondere ein demontierbarer Dosiernippel, durch dessen Öffnungen das unter Druck stehende Strahlmittel in den Mischraum geleitet wird. Die Querschnitte der Öffnungen sind der Korngröße des Strahlmittels angepasst. Die Öffnungen der Dosiernippel sind quer zur Schwerkraftrichtung angeordnet, um die in den Mischraum gelangende Strahlmittelmenge zu reduzieren.

Alternativ sind auch Mischkammern mittels Rüttelprinzip denkbar. Das Mischsystem besteht aus einem Mischraum mit einem Druckein- und -ausgang und einem Druckbehälter, in dem sich das Strahlgut befindet. Am Druckeingang wird die bauseitige Druckluftleitung angeschlossen, am Druckausgang wird das Luft-Strahlgut-Gemisch mit der Strahleinheit entnommen. An der Schnittstelle zwischen dem Mischraum und der Druckbehälter befindet sich eine Lochscheibe, die Anzahl und der Durchmesser, der sich darin befindenden Löcher sind der Korngröße des Strahlmittels abgepasst. Das Mischsystem ist auf einen Schwingungserzeuger montiert. Die Schwingungsintensität kann in verschiedene Stufen einstellt werden. Durch der Schwingungsintensität kann die Strahlsandmenge, die in den Mischraum gelangt, beeinflusst werden.

Unter einem "Düsenelement" soll in diesem Zusammenhang insbesondere ein Element verstanden werden, welches mittels einer Querschnittsverengung die Strömung eines Fluids beeinflusst. Das Düsenelement ist insbesondere zu einer Beeinflussung der Geschwindigkeit und des statischen Drucks eines Fluids und/oder einer Fluid-Zusatzstoff-Mischung vorgesehen. Vorzugsweise weist das Düsenelement eine Querschnittsverengung auf. Alternativ ist auch ein Düsenelement mit mehreren Querschnittsverengungen denkbar. Vorzugsweise ist das Düsenelement aus einem metallischen Werkstoff ausgebildet. Alternativ ist auch ein anderes, einem Fachmann als sinnvoll erscheinendes Material des Düsenelements, beispielsweise ein Kunststoffmaterial, denkbar. Vorzugsweise ist das Düsenelement einteilig ausgebildet. Alternativ ist auch eine mehrteilige Ausführung des Düsenelements denkbar. Vorzugsweise bündelt das Düsenelement insbesondere das Fluid und/oder die Fluid-Zusatzstoff-Mischung zu einem Strahl. Vorzugsweise weist das Düsenelement insbesondere eine Auslassöffnung auf. Vorzugsweise ist die Auslassöffnung in einer Endfläche in Haupterstreckungsrichtung des Düsenelements ausgebildet. Vorzugsweise ist das Düsenelement als Zylinder, insbesondere Hohlzylinder, mit zumindest einer Querschnittsverengung der Außenwandung und Innenwandung ausgebildet. Alternativ sind auch mehrere Querschnittsverengungen der Außenwandung und Innenwandung denkbar. Ferner ist auch eine andere, einem Fachmann als sinnvoll erscheinende räumliche geometrische Form des Düsenelements, beispielsweise ein Quader und/oder ein Kegel denkbar.

Vorzugsweise wird bei der Aufrauung eine Rauheit, insbesondere eine Rautiefe Rz und/oder ein arithmetischer Mittenrauwert Ra, einer Oberfläche vergrößert. Vorzugsweise wird durch das Aufrauen der Oberfläche die Adhäsion zwischen der Oberfläche des, insbesondere dentalen, Werkstücks und/oder einer Apparatur und einem Klebstoff erhöht. Ferner werden durch das Aufrauen Verschmutzungen und Unreinheiten von der Oberfläche entfernt.

Unter einem "Tast- und/oder Abstandselement" soll in diesem Zusammenhang insbesondere ein Element, insbesondere ein längliches Bauteil verstanden werden, welches zu einer Überwachung eines Mindestabstands einer Spitze eines Düsenelements zu einem, insbesondere dentalen, Werkstück und/oder einer Apparatur vorgesehen ist. Vorzugsweise ist das Tast- und/oder Abstandselement zu einer Überwachung eines Mindestabstands einer Spitze eines Düsenelements zu einer Bearbeitungsoberfläche ausgebildet. Vorzugsweise wird der Mindestabstand über die gesamte Zeit der Bearbeitung durch das Tast- und/oder Abstandselement aufrechterhalten. Insbesondere wird der Mindestabstand mechanisch überwacht. Vorzugsweise ist der Mindestabstand über die Länge des Tast- und/oder Abstandselements definiert. Vorzugsweise ist die Überwachung des Mindestabstands dauerhaft über die Länge des Tast- und/oder Abstandselements festgelegt. Vorzugsweise wird der Mindestabstand über eine Berührung zwischen der Bearbeitungsoberfläche und dem Tast- und/oder Abstandselement überwacht. Unter einem "Mindestabstand" soll in diesem Zusammenhang ein Abstand verstand werden, in welchem der Strahl der Strahleinheit keine aggressive und/oder zerstörende Wirkung auf die Oberfläche des insbesondere dentalen, Werkstücks und/oder einer Apparatur besitzt. Vorzugsweise beträgt der Mindestabstand zwischen der Spitze der Düseneinheit und der Oberfläche des, insbesondere dentalen, Werkstücks und/oder einer Apparatur insbesondere zumindest mindestens 20 mm, bevorzugt zumindest mindestens 15 mm, besonders bevorzugt zumindest mindestens 10 mm und zumindest maximal 40mm. Vorzugsweise ist das Tast- und/oder Abstandselement in einem Nahbereich des Düsenelements angeordnet. Vorzugsweise ist das Tast- und/oder Abstandselement insbesondere zumindest teilweise als längliches Bauteil ausgebildet. Unter einem "Nahbereich" soll in diesem Zusammenhang insbesondere ein räumlicher Bereich verstanden werden, welcher sich vorzugsweise mit einem Radius von maximal 3 cm, vorzugsweise maximal 2 cm und besonders bevorzugt maximal 1 cm um einen geometrischen Mittelpunkt des Firstpunkts erstreckt. Dabei soll unter einem "länglichen Bauteil" insbesondere ein Bauteil verstanden werden, das eine Höhenerstreckung aufweist, die um ein Vielfaches größer ist als eine Längserstreckung und eine Quererstreckung des Bauteils. Vorzugsweise ist das Tast- und/oder Abstandselement einstückig, bevorzugt einteilig, ausgebildet. Alternativ ist auch eine mehrteilige Ausführung denkbar. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren hergestellt.

Durch die erfindungsgemäße Ausgestaltung der Strahleinheit kann insbesondere vorteilhaft eine optimale Entfernung zwischen dem Düsenelement und einer zu bearbeitenden Oberfläche eines Werkstücks und/oder einer Apparatur vorteilweise überwacht und aufrechterhalten werden. Es kann eine Beschädigung, insbesondere ein zu starker Abtrag, einer Oberfläche des Werkstücks und/oder der Apparatur vermieden werden. Hierdurch kann eine vorteilhaft hohe Einsatzsicherheit erreicht werden. Weiter kann eine vorteilhaft gleichbleibende Qualität erreicht werden, da während des gesamten Bearbeitungsschritts ein gleichbleibender Mindestabstand eingehalten wird. Hierdurch kann eine vorteilhafte Qualitätsüberwachung erreicht werden. Es kann insbesondere eine vereinfachte Prozessführung durch eine ständige Überwachung des Mindestabstands erreicht werden. Hierdurch kann eine vorteilhafte Verkürzung der Prozessdauer erreicht werden. Es kann insbesondere eine vorteilhafte Strahleinheit für eine Strahlvorrichtung, insbesondere Dentalstrahlvorrichtung, bereitgestellt werden. Es kann insbesondere eine einfache Überwachung des Mindestabstands gewährleistet werden.

Des Weiteren wird vorgeschlagen, dass das Tast- und/oder Abstandselement an einem Ende des Düsenelements einen von dem Düsenelement wegragenden Fortsatz aufweist, wobei das Tast- und/oder Abstandselement teilweise an einer Außenwandung des Düsenelements angeordnet ist. Vorzugsweise ragt der Fortsatz über das Ende des Düsenelements hinaus, welches die Auslassöffnung aufweist. Vorzugsweise ist der Fortsatz mit einer Länge von zumindest mindestens 20 mm, bevorzugt zumindest mindestens 15 mm, besonders bevorzugt zumindest mindestens 10 mm und zumindest maximal 40mm ausgebildet. Vorzugsweise ist der Fortsatz in einem zu der Haupterstreckungsrichtung des Düsenelements axialen Bereich angeordnet, welcher zu einem axialen Bereich, in welchem das Düsenelement angeordnet ist, zumindest im Wesentlichen verschieden ist. Unter einer "Außenwandung" soll in diesem Zusammenhang insbesondere zumindest eine Mantelfläche des Düsenelements verstanden werden. Vorzugsweise ist die Mantelfläche des von dem Düsenelement wegragenden Fortsatzes auf einer gedachten in Haupterstreckungsrichtung des Düsenelements endlosen erstreckenden Mantelfläche der Außenwandung angeordnet. Alternativ ist der von dem Düsenelement wegragende Fortsatz beabstandet zu einer gedachten in Haupterstreckungsrichtung des Düsenelements endlosen erstreckenden Mantelfläche der Außenwandung des Düsenelements angeordnet. Ferner kann insbesondere eine vorteilhafte Mindestabstandsüberwachung erreicht werden.

Ferner wird vorgeschlagen, dass der Fortsatz des Tast- und/oder Abstandselements von einer sich im Wesentlichen parallel zu einer Haupterstreckungsrichtung des Düsenelements erstreckenden Lanze gebildet ist. Vorzugsweise weist die Lanze über in Haupterstreckungsrichtung einen konstanten Querschnitt auf. Alternativ ist auch ein verjüngender Querschnitt in Richtung entgegengesetzt zum Düsenelement denkbar. Die Lanze weist vorzugsweise eine kreisrunde Querschnittsform auf, insbesondere in einer Ebene senkrecht zu einer Haupterstreckungsrichtung des Fortsatzes und/oder des Düsenelements. Alternativ ist in einem Querschnitt senkrecht zur Haupterstreckungsrichtung des Fortsatzes auch eine ovale, rechteckige oder viereckige Form denkbar. Ferner sind auch andere, einem Fachmann als sinnvoll erscheinende Querschnittformen denkbar. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Dadurch kann insbesondere eine vorteilhaft mechanische Mindestabstandsüberwachung erreicht werden.

Des Weiteren wird vorgeschlagen, dass der Fortsatz des Tast- und/oder Abstandselements eine Mittelachse aufweist, welche sich zumindest im Wesentlichen parallel zu einer Haupterstreckungsrichtung des Düsenelements erstreckt, wobei die Mittelachse des Fortsatzes, insbesondere der gesamte Fortsatz, beabstandet von einer Strahlachse des Düsenelements angeordnet ist. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Alternativ bilden die Mittelachse des Fortsatzes des Tast- und/oder Abstandselements und die Strahlachse des Düsenelements insbesondere einen Winkel aus. Vorzugsweise beträgt der Abstand zwischen der Mittelachse des Fortsatzes des Tast- und/oder Abstandselements und einer Strahlachse des Düsenelements insbesondere zumindest 3 mm, vorzugsweise maximal 2 mm und besonders bevorzugt zumindest 1 mm. Dadurch kann insbesondere eine vorteilhafte Einsatzsicherheit und Qualitätsüberwachung bereitgestellt werden. Ferner kann insbesondere eine vorteilhafte Mindestabstandsüberwachung erreicht werden.

Ferner wird vorgeschlagen, dass das Tast- und/oder Abstandselement eine Koppelstelle mit dem Düsenelement aufweist. Vorzugsweise ist das Tast- und/oder Abstandselement direkt mit dem Düsenelement koppelbar. Vorzugsweise ist die Koppelung zwischen dem Tast- und/oder Abstandselement und dem Düsenelement an der Koppelstelle als formschlüssige Verbindung ausgebildet. Alternativ ist auch eine kraftschlüssige Verbindung als Koppelstelle zwischen dem Tast- und/oder Abstandselement und dem Düsenelement denkbar. Vorzugsweise ist die Koppelstelle auf einer Außenwandung des Düsenelement ausgebildet. Alternativ kann die Koppelstelle auch innerhalb des Düsenelements ausgebildet sein. Ferner ist auch eine andere, einem Fachmann als sinnvoll erscheinende Koppelstelle zwischen dem Tast- und/oder Abstandselement und dem Düsenelement denkbar. Vorzugsweise ist die Koppelstelle über einen Teilbereich des Düsenelements und des Abstandelements ausgebildet. Unter einem "Teilbereich" soll in diesem Zusammenhang vorzugsweise zumindest mindestens 30%, bevorzugt zumindest mindestens 45%, besonders bevorzugt mindestens 60% und vorzugsweise maximal 75% der Gesamtlänge des Düsenelements und des Abstandelements verstanden werden. Dadurch kann insbesondere eine vorteilhafte Koppelstelle zwischen dem Tast- und/oder Abstandselement und dem Düsenelement bereitgestellt werden. Ferner kann insbesondere eine vorteilhafte Haltungssicherheit gewährleistet werden.

Des Weiteren wird vorgeschlagen, dass die Koppelung zwischen dem Tast- und/oder Abstandselement und dem Düsenelement an der Koppelstelle als eine lösbare Verbindung ausgebildet ist. Vorzugsweise ist die Koppelstelle als mechanische Verbindung ausgebildet. Vorzugsweise ist die lösbare Verbindung werkzeuglos lösbar ausgebildet. Alternativ ist auch eine lösbare Verbindung denkbar, welche mit einem Werkzeug lösbar ausgebildet ist. Unter einer "lösbaren Verbindung" soll in diesem Zusammenhang beispielsweise eine Schraubverbindung, eine Klipsverbindung, eine Passverbindung und/oder eine Stiftverbindung verstanden werden. Vorzugsweise bildet die lösbare Verbindung eine kraftschlüssige und/oder formschlüssige Verbindung aus. Dadurch kann insbesondere eine vorteilhafte Koppelstelle bereitgestellt werden. Es kann insbesondere ein flexibel anbringbares Abstandelement bereitgestellt werden.

Ferner wird vorgeschlagen, dass das Tast- und/oder Abstandselement an einem Ende des Düsenelements einen von dem Düsenelement wegragenden Fortsatz aufweist, wobei der Fortsatz als ein Abschattungselement für den mittels des Düsenelements ausgebrachten Strahl ausgebildet ist, wobei das Abschattungselement eine Strahlachse des Düsenelements in einer Ebene senkrecht zu der Strahlachse zumindest teilweise umschließt. Unter einem "Abschattungselement" soll in diesem Zusammenhang insbesondere ein Element verstanden werden, welches den Wirkungsbereich eines von der Strahlungseinheit erzeugten und/oder ausgebrachten Strahls auf eine Bearbeitungsfläche begrenzt. Darunter, dass das Abschattungselement in einer Ebene senkrecht zu der Strahlachse die Strahlachse des Düsenelements "zumindest teilweise umschließt" soll in diesem Zusammenhang verstanden werden, dass das Abschattungselement die Strahlachse des Düsenelements in einer Ebene senkrecht zu der Strahlachse vorzugsweise in einem Winkelbereich von zumindest 90°, vorzugsweise zumindest 160° und besonders bevorzugt zumindest 220° ausgehend von der Strahlachse in radialer Richtung umschließt. Alternativ ist auch denkbar, dass das Abschattungselement die Strahlachse des Düsenelements in einer Ebene senkrecht zu der Strahlachse vollständig umschließt. Vorzugsweise weist das Tast- und/oder Abstandselement, insbesondere der Fortsatz des Tast- und/oder Abstandselements, in einem Querschnitt senkrecht zu einer Haupterstreckungsachse eine Sichelform, eine Halbringform oder dergleichen auf. Bevorzugt weist der Fortsatz eine Halbrohrform auf. Alternativ ist auch eine andere, einem Fachmann als sinnvoll erscheinende Querschnittform senkrecht zu einer Haupterstreckungsachse, beispielsweise insbesondere eine Reckteckform, Mehreckform und/oder eine abgewinkelte Form denkbar. Dadurch kann insbesondere eine vorteilhafte Einschränkung des Wirkungsbereichs gewährleistet werden. Es kann insbesondere eine effiziente Strahleinheit bereitgestellt werden.

Des Weiteren wird vorgeschlagen, dass die Strahlvorrichtung ein Halteelement aufweist, wobei das Tast- und/oder Abstandselement mittels des Halteelements lösbar an dem Düsenelement fixiert ausgebildet ist, wobei das Halteelement dazu vorgesehen ist, mittels einer Schraubverbindung eine lösbare Verbindung mit einer Pistoleneinheit der Strahleinheit auszubilden. Vorzugsweise ist das Tast- und/oder Abstandselement mittels einer formschlüssigen und/oder kraftschlüssigen Verbindungstelle über das Halteelement an dem Düsenelement lösbar fixiert. Unter einem "Halteelement" soll in diesem Zusammenhang insbesondere ein Element verstanden werden, welches zu einer, insbesondere lösbaren Fixierung eines ersten Bauteils an einem weiteren Bauteil vorgesehen ist, wobei die Verbindung zwischen den Bauteilen über das Halteelement bereitgestellt wird. Vorzugsweise ist das Halteelement insbesondere dazu vorgesehen, das Tast- und/oder Abstandselement unverlierbar an dem Düsenelement zu fixieren. Bevorzugt ist das Tast- und/oder Abstandselement auf das Düsenelement aufgesteckt oder aufgelegt ausgebildet, wobei ein Lösen des Tast- und/oder Abstandselements von dem Düsenelement mittels des Halteelements vermieden wird. Alternativ weist die Strahleinheit ein weiteres Halteelement auf. Vorzugsweise ist das Halteelement insbesondere zu einer Verbindung des Düsenelements und der Pistoleneinheit und das weitere Halteelement zu einer Fixierung des Tast- und/oder Abstandselements an dem Düsenelement vorgesehen. Vorzugsweise ist das weitere Halteelement als formschlüssige und/oder kraftschlüssige Verbindungsstelle ausgebildet. Vorzugsweise ist das weitere Haltelement mittels einer Schraubverbindung mit dem Düsenelement verbunden ausgebildet. Dadurch kann insbesondere ein Halteelement mit vorteilhaften Eigenschaften hinsichtlich eines Austausches des Tast- und/oder Abstandselements bereitgestellt werden. Es kann insbesondere eine Zeitersparnis in Wartungsschritt erreicht werden.

Ferner wird vorgeschlagen, dass das Düsenelement zumindest eine Ausnehmung aufweist, in welcher das Tast- und/oder Abstandselement zumindest teilweise angeordnet ist. Vorzugsweise ist die Ausnehmung zumindest im Wesentlichen parallel zu einer Haupterstreckungsrichtung des Düsenelements ausgerichtet. Alternativ ist die Ausnehmung des Düsenelements entsprechend der Form und/oder der Ausrichtung des Tast- und/oder Abstandselements ausgebildet. Die Ausnehmung ist insbesondere von einer Vertiefung, insbesondere Nut, in der Außenwandung des Düsenelements gebildet, welche zu einer Aufnahme des Tast- und/oder Abstandselements ausgebildet ist. Vorzugsweise ist die Ausnehmung senkrecht zu einer Haupterstreckungsachse des Düsenelements vorzugsweise zumindest 1 mm, bevorzugt zumindest 2 mm und besonders bevorzugt zumindest 3 mm tief ausgebildet. Alternativ ist auf dem Düsenelement eine weitere Ausnehmung ausgebildet. Vorzugsweise ist die weitere Ausnehmung rechtwinklig zu der ersten Ausnehmung angeordnet. Alternativ ist auch eine andere, einem Fachmann als sinnvoll erscheinende Ausrichtung der weiteren Ausnehmung zu der ersten Ausnehmung denkbar. Vorzugsweise grenzt die weitere Ausnehmung direkt an die erste Ausnehmung an. Vorzugsweise weist das Tast- und/oder Abstandselement eine rechtwinklige Abwinklung auf, welche auf die weitere Ausnehmung angepasst ausgebildet ist. Vorzugsweise weist das Tast- und/oder Abstandselement eine erste Haupterstreckungsrichtung und eine zweite Haupterstreckungsrichtung auf. Vorzugsweise ist die erste Haupterstreckungsrichtung des Tast- und/oder Abstandselements in einer ersten Ausnehmung und die zweite Haupterstreckungsrichtung des Tast- und/oder Abstandselements in einer weiteren Ausnehmung angeordnet. Vorzugsweise ist die weitere Ausnehmung dazu vorgesehen, das Tast- und/oder Abstandselement gegen eine Krafteinwirkung parallel zu einer Haupterstreckungsrichtung des Düsenelements am Düsenelement zu fixieren. Dadurch kann insbesondere eine vorteilhafte Verbindungsstelle des Tast- und/oder Abstandselements mit dem Düsenelement bereitgestellt werden.

Gemäß einer weiteren Ausgestaltung wird vorgeschlagen, dass das Tast- und/oder Abstandselement sich helixartig um das Düsenelement erstreckt. Vorzugsweise weist das Tast- und/oder Abstandselement einen helixartigen Teilbereich auf. Bevorzugt erstreckt sich der helixartige Teilbereich an einer Außenwandung des Düsenelements angeordnet. Alternativ ist das helixartige Tast- und/oder Abstandselement in einer in dem Düsenelement ausgebildeten Ausnehmung angeordnet. Vorzugsweise ist diese Ausnehmung insbesondere helixartig ausgebildet. Unter "helixartig" soll in diesem Zusammenhang insbesondere ein zylindrisch spiralförmiges Bauteil verstanden werden, welches das Düsenelement flächig an einem Bereich der dünnsten Querschnittsverengung umgibt. Vorzugsweise geht der helixartige Teil des Tast- und/oder Abstandselements fließend in einen lanzenförmigen Fortsatz über. Vorzugsweise ist das helixartige Tast- und/oder Abstandselement über eine Kraft- und/oder Formschluss-Verbindung mit dem Düsenelement fixiert ausgebildet. Vorzugsweise ist das helixartige Tast- und/oder Abstandselement lösbar mit dem Düsenelement ausgebildet. Ferner ist das helixartige Tast- und/oder Abstandselement und das Düsenelement über eine Schraubverbindung miteinander fixiert ausgebildet.

Dadurch kann insbesondere eine vorteilhafte Verbindungsstelle des Tast- und/oder Abstandselements mit dem Düsenelement bereitgestellt werden.

Gemäß einer weiteren Ausgestaltung wird vorgeschlagen, dass das Tast- und/oder Abstandselement die Spitze des Düsenelements vollflächig in zumindest drei Raumrichtungen, senkrecht zu einer Haupterstreckungsrichtung des Düsenelements umschließt. Vorzugsweise ist das Tast- und/oder Abstandselement als zumindest teilweise Mantelfläche einer Zylinderform um das Düsenelement ausgebildet. Alternativ sind auch andere, einem Fachmann als sinnvoll erscheinende Formen des Tast- und/oder Abstandselements um die Spitze des Düsenelements denkbar. Unter "teilweise" soll in diesem Zusammenhang verstanden werden, dass das Tast- und/oder Abstandselement die Spitze des Düsenelements vorzugsweise zumindest 200 °, bevorzugt zumindest 235° und besonders bevorzugt 270° umschließt. Alternativ ist denkbar, dass das Tast- und/oder Abstandselement die Spitze des Düsenelements vollständig flächig umgibt. Unter einer "Spitze des Düsenelements" soll in diesem Zusammenhang insbesondere der Bereich der dünnsten Querschnittsverengung des Düsenelements verstanden werden. Vorzugsweise ist das Tast- und/oder Abstandselement über eine Kraft- und/oder Formschluss-Verbindung mit dem Düsenelement fixiert ausgebildet. Vorzugsweise ist das Tast- und/oder Abstandselement über eine Klips- und/oder Steckverbindung an dem Düsenelement fixiert ausgebildet. Vorzugsweise geht der vollflächige Teil des Tast- und/oder Abstandselements fließend in einen lanzenförmigen Fortsatz über. Vorzugsweise ist der Fortsatz auf einer Endfläche des vollflächigen Teils des Tast- und/oder Abstandselements in Haupterstreckungsrichtung des Tast- und/oder Abstandselements angeordnet. Dadurch kann insbesondere eine vorteilhafte stabile und widerstandsfähige Verbindungsstelle des Tast- und/oder Abstandselements mit dem Düsenelement bereitgestellt werden.

Gemäß einer weiteren Ausgestaltung wird vorgeschlagen, dass das Tast- und/oder Abstandselement entkoppelt von dem Düsenelement ausgebildet ist. Vorzugsweise ist das Tast- und/oder Abstandselement beabstandet zum Düsenelement an der Strahleinheit angeordnet. Vorzugsweise ist das Tast- und/oder Abstandselement an einem von der Pistoleneinheit getrennten, separaten Halteelement der Strahleinheit angeordnet. Vorzugsweise ist das Halteelement insbesondere als Tastarm ausgebildet. Besonders bevorzugt ist das Halteelement mit einer CNC-Maschineneinheit verbunden. Bei einer automatisierten Aufrauung einer Oberfläche eines dentalen Werkstücks wäre insbesondere denkbar, dass eine Oberfläche, insbesondere eine Kavität des Werkstücks, insbesondere ohne die Pistoleneinheit, von dem Tast- und/oder Abstandselement abgefahren und erfasst und anschließend, insbesondere ohne das Tast- und/oder Abstandselement, mittels des Düsenelements bearbeitet wird. Vorzugsweise bildet das Tast- und/oder Abstandselement eine Koppelstelle mit dem Halteelement aus. Vorzugsweise ist die Koppelstelle lösbar ausgebildet. Vorzugsweise ist die Koppelstelle als formschlüssige und/oder kraftschlüssige Koppelstelle ausgebildet. Vorzugsweise umschließt das Halteelement das Tast- und/oder Abstandselement zumindest teilweise. Vorzugsweise ist die Koppelstelle werkzeuglos lösbar ausgebildet. Dadurch kann insbesondere ein vorteilhaftes Tast- und/oder Abstandselement hinsichtlich einer Verbesserung der Variabilität erreicht werden. Es kann insbesondere eine vorteilhafte Vorabüberwachung und Automatisierung bereitgestellt werden. Es wäre ferner insbesondere auch denkbar, dass das Tast- und/oder Abstandselement an der Pistoleneinheit angeordnet ist. Ferner ist das Tast- und/oder Abstandselement an einer Mantelfläche der Pistoleneinheit der Strahleinheit angeordnet. Alternativ ist auch eine andere, einem Fachmann als sinnvoll erscheinende Anordnung des Tast- und/oder Abstandselements an einer Komponente der Strahleinheit denkbar.

Des Weiteren wird vorgeschlagen, dass das Tast- und/oder Abstandselement eine Beschichtung aufweist. Insbesondere ist die Beschichtung zu einem Schutz der Bearbeitungsfläche vorgesehen. Vorzugsweise schützt die Beschichtung die Bearbeitungsfläche insbesondere gegen Metallabrieb des Abstandelements. Unter einer "Beschichtung" soll in diesem Zusammenhang insbesondere ein Aufbringen einer festhaftenden Schicht aus formlosem Stoff auf die Oberfläche eines Werkstückes verstanden werden. Vorzugsweise ist das Tast- und/oder Abstandselement vollflächig beschichtet ausgebildet. Alterativ ist nur die Spitze des Fortsatzes beschichtet ausgebildet. Vorzugsweise wir die Beschichtung durch eine einzelne Schicht ausgebildet. Alterativ ist auch eine Beschichtung aus mehreren Schichten denkbar. Vorzugsweise ist die Beschichtung als Keramikbeschichtung ausgebildet. Alternativ sind auch alle anderen, einem Fachmann als sinnvoll erscheinende Beschichtungmaterialien denkbar. Dadurch kann insbesondere ein vorteilhaftes Tast- und/oder Abstandselement bereitgestellt werden. Es kann insbesondere ein vorteilhafter Schutz der Bearbeitungsfläche erreicht werden.

Gemäß einer weiteren Ausgestaltung wird vorgeschlagen, dass das Tast- und/oder Abstandselement an einem Ende eine Keramikkugel ausbildet, wobei die Keramikkugel in Haupterstreckungsrichtung des Tast- und/oder Abstandselements an der Berührungsfläche mit einem, insbesondere dentalen, Werkstück und/oder einer Apparatur angeordnet ist. Vorzugsweise ist die Keramikkugel an einem Ende des Fortsatzes ausgebildet. Vorzugsweise besitzt die Keramikkugel denselben Querschnittdurchmesser, wie das Ende des Fortsatzes. Alterativ ist auch eine Keramikkugel mit einem größeren Querschnittdurchmesser als das Ende des Fortsatzes denkbar. Unter einer "Berührungsfläche" soll in diesem Zusammenhang insbesondere die Fläche des Tast- und/oder Abstandselements verstanden werden, welche die Bearbeitungsfläche berührt. Vorzugsweise ist das Tast- und/oder Abstandselement nicht beschichtet ausgebildet. Dadurch kann insbesondere ein vorteilhaftes Tast- und/oder Abstandselement bereitgestellt werden. Es kann insbesondere ein vorteilhafter Schutz der Bearbeitungsfläche erreicht werden.

Ferner wird vorgeschlagen, dass die Strahleinheit eine Beleuchtungseinheit aufweist. Vorzugsweise wird mittels der Beleuchtungseinheit ein definierter Bereich der Bearbeitungsfläche ausgeleuchtet. Unter einer "Beleuchtungseinheit" soll in diesem Zusammenhang insbesondere eine Einheit verstanden werden, welche zu einer Beleuchtung einer Bearbeitungsfläche während einer Bearbeitung vorgesehen ist. Vorzugsweise weist die Beleuchtungseinheit zumindest einen Lichtleiter und zumindest eine Lichtquelle auf. Vorzugsweise ist die Lichtquelle als LED-Element ausgebildet. Des Weiteren wird vorgeschlagen, dass die Beleuchtungseinheit im Nahbereich des Tast- und/oder Abstandselements angeordnet ist. Vorzugsweise ist die Beleuchtungseinheit kontaktiert an dem Tast- und/oder Abstandselement angeordnet. Alterativ ist auch eine andere, einem Fachmann als sinnvoll erscheinende Anordnung der Beleuchtungseinheit denkbar. Vorzugsweise ist die Beleuchtungseinheit innerhalb der Strahleinheit ausgebildet. Dadurch kann insbesondere eine vorteilhafte Beleuchtung der Bearbeitungsfläche bereitgestellt werden. Es kann insbesondere eine vorteilhafte Bearbeitung durch eine Strahleinheit erreicht werden.

Ferner wird vorgeschlagen, dass die Beleuchtungseinheit zumindest teilweise durch das Tast- und/oder Abstandselement ausgebildet ist, wobei das Tast- und/oder Abstandselement teilweise als Lichtleiter ausgebildet ist. Vorzugsweise ist das Tast- und/oder Abstandselement als Lichtleiter ausgebildet. Alternativ wäre auch denkbar, dass ein Lichtleiter in einem in das Tast- und/oder Abstandselement eingebrachten Kanal angeordnet ist. Vorzugsweise ist die Lichtquelle kontaktierend an dem Lichtleiter angeordnet. Vorzugsweise wird über diese Kontaktstelle das durch die Lichtquelle erzeugte Licht in den Lichtleiter eingekoppelt. Vorzugsweise ist die Lichtquelle in einer Ausnehmung des Düsenelements angeordnet. Alternativ ist auch eine andere, einem Fachmann als sinnvoll erscheinende Anordnung der Lichtleiter denkbar. Unter einem "Lichtleiter" soll in diesem Zusammenhang insbesondere ein Element verstanden werden, welches ein eingekoppeltes Licht durch Totalreflexion zu einem Ende des Lichtleiters weiterleitet. Dadurch kann insbesondere eine vorteilhafte Beleuchtung der Bearbeitungsfläche bereitgestellt werden.

Des Weiteren wird vorgeschlagen, dass die Strahleinheit ein Laserelement umfasst, welches dazu vorgesehen ist, mit überlagerten Laserstrahlen eine Geometrie abzufahren. Vorzugsweise ist das Laserelement in einem Nahbereich des Tast- und/oder Abstandselements angeordnet. Vorzugsweise ist das Laserelement zumindest im Wesentlichen parallel zu einer Haupterstreckungsrichtung des Tast- und/oder Abstandselements ausgerichtet angeordnet. Unter einem "Laserelement" soll in diesem Zusammenhang insbesondere ein optisches Element verstanden werden, welches eine Vielzahl von Laserstrahlen erzeugt. Vorzugsweise werden aus den detektierten Daten die Geometrie des Werkstücks und/oder der Apparatur ermittelt. Dadurch kann insbesondere eine vorteilhafte Ermittlung der Geometrie des Werkstücks und/oder der Apparatur bereitgestellt werden.

Es wird ferner vorgeschlagen, dass das Düsenelement einen Strahlkanal ausbildet, welcher einen sich entlang einer Längsachse verändernden Durchmesser und/oder einen zumindest teilweise von einer Gerade verschiedenen, insbesondere gekrümmten Verlauf aufweist. Das Düsenelement ist zu einem gezielten Ausbringen eines, insbesondere abrasiven, Strahls vorgesehen. Das Düsenelement ist insbesondere zu einer Führung und Ausbringung von Strahlgut, insbesondere des abrasiven Strahls vorgesehen. Vorzugsweise bildet das Düsenelement einen Strahlkanal aus, welcher von einer entlang einer Haupterstreckungsrichtung des Düsenelements durchgehenden Ausnehmung gebildet ist. Das Düsenelement begrenzt den Strahlkanal. Bevorzugt bildet ein Ende des Strahlkanals einen Austritt für das Strahlgut, insbesondere den abrasiven Strahl, aus. Das Düsenelement bildet insbesondere einen Teil eines Handteils der Strahleinheit. Vorzugsweise ist das Düsenelement lösbar mit einem Grundkörper der Strahleinheit, insbesondere des Handteils, verbunden. Bevorzugt ist das Düsenelement austauschbar ausgebildet. Das Düsenelement ist zu einer Beeinflussung der Geschwindigkeit und des statischen Drucks eines Fluids und/oder einer Fluid-Zusatzstoff Mischung vorgesehen. Vorzugsweise wird während eines Betriebs Strahlgut, insbesondere ein Luft-Strahlgut-Gemisch, über das Düsenelement direkt ausgestrahlt. Das Düsenelement bündelt insbesondere das Fluid und/oder die Fluid-Zusatzstoff-Mischung, insbesondere das Luft-Strahlgut-Gemisch, zu einem Strahl. Die Längsachse des Strahlkanals erstreckt sich insbesondere zumindest im Wesentlichen parallel zu der Haupterstreckungsrichtung des Düsenelements. Die Längsachse ist insbesondere von einer Mittelachse des Strahlkanals gebildet. Vorzugsweise weist der Strahlkanal entlang der Längsachse zumindest zwei verschiedene Durchmesser auf. Bevorzugt weist der Strahlkanal entlang der Längsachse eine Vielzahl verschiedener Durchmesser auf. Der Durchmesser des Strahlkanals verändert sich insbesondere kontinuierlich. Es wäre jedoch auch denkbar, dass der Strahlkanal Durchmessersprünge aufweist. Die verschiedenen Durchmesser des Strahlkanals sind insbesondere wesentlich voneinander verschieden. Bevorzugt beträgt ein größter Durchmesser des Strahlkanals zumindest 110%, vorzugsweise zumindest 140%, bevorzugt zumindest 170% und besonders bevorzugt zumindest 200% eines kleinsten Durchmessers des Strahlkanals. Vorzugsweise weist der Strahlkanal entlang der Längsachse zumindest in einem von einem Randbereich beabstandeten Mittelbereich zumindest zwei Durchmesser auf. Vorzugsweise weist der Strahlkanal dabei einen Mittelbereich und zwei an beiden Seiten des Mittelbereichs angrenzende Randbereiche auf, wobei sich die Randbereiche jeweils über 10% einer Längserstreckung des Strahlkanals erstrecken. Eine Durchmesserveränderung findet daher insbesondere zumindest nicht lediglich in den Randbereichen des Strahlkanals statt. Alternativ oder zusätzlich weist der Strahlkanal einen zumindest teilweise von einer Gerade verschiedenen, insbesondere gekrümmten Verlauf auf. Vorzugsweise weist eine Mittelachse und/oder eine Mittelfaser des Strahlkanals einen zumindest teilweise von einer Gerade verschiedenen, insbesondere gekrümmten Verlauf auf. Entlang des Verlaufs kann der Durchmesser des Strahlkanals sowohl konstant sein, als auch sich verändern. Der Verlauf kann dabei insbesondere ein- oder mehrfach gekrümmt sein und/oder eine oder mehrere Abknickungen aufweisen. Vorzugsweise weist der Verlauf mehrere entgegengesetzte Krümmungen auf, sodass ein wellenlinienförmiger Verlauf entsteht. Es sind jedoch auch andere, einem Fachmann als sinnvoll erscheinende Verläufe denkbar, wie beispielsweise ein Zickzack-Verlauf oder dergleichen. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Dadurch kann insbesondere ein vorteilhaftes Strahlverhalten ermöglicht werden. Es kann in einem Betrieb insbesondere ein vorteilhaft gleichmäßiger Strahl bereitgestellt werden. Insbesondere kann eine Korona- oder Spotbildung auf dem Werkstück zuverlässig vermieden werden.

Es wird weiter vorgeschlagen, dass der Strahlkanal zumindest einen mittleren Führungsbereich und einen Austrittsbereich aufweist, wobei ein Durchmesser des Austrittsbereichs, zumindest gemittelt, größer ist als ein Durchmesser des mittleren Führungsbereichs. Vorzugsweise sind der Führungsbereich und der Austrittsbereich jeweils von einem axialen Bereich des Strahlkanals gebildet. Bevorzugt erstrecken sich der Austrittsbereich und der Führungsbereich jeweils über zumindest 10%, vorzugsweise zumindest 15% und besonders bevorzugt zumindest 20% einer Längserstreckung des Strahlkanals. Vorzugsweise umfasst der Austrittsbereich eine Austrittsöffnung des Strahlkanals. Bevorzugt erstreckt sich der Austrittsbereich entlang der Längserstreckung von dem Führungsbereich bis zu der Austrittsöffnung des Strahlkanals. Der Führungsbereich erstreckt sich insbesondere zumindest teilweise in dem Mittelbereich des Strahlkanals. Bevorzugt nimmt der Führungsbereich einen längsten Abschnitt des Strahlkanals ein. Vorzugsweise weist der Strahlkanal entlang der Längsachse zusätzlich einen Eintrittsbereich auf. Bevorzugt grenzt der Eintrittsbereich auf einer dem Austrittsbereich abgewandten Seite an den Führungsbereich an. Vorzugsweise ist ein mittlerer Durchmesser des Austrittsbereichs größer als ein mittlerer Durchmesser des mittleren Führungsbereichs. Bevorzugt ist der Durchmesser des Strahlkanals in dem Austrittsbereich in jedem Punkt größer als ein Durchmesser des Strahlkanals in dem Führungsbereich. Vorzugsweise bildet der Führungsbereich einen Bereich des Strahlkanals mit dem geringsten Durchmesser. Dadurch kann insbesondere ein vorteilhaftes Strahlverhalten ermöglicht werden. Es kann in einem Betrieb insbesondere ein vorteilhaft gleichmäßiger Strahl bereitgestellt werden. Insbesondere kann eine Korona- oder Spotbildung auf dem Werkstück zuverlässig vermieden werden.

Ferner wird vorgeschlagen, dass der mittlere Führungsbereich einen gleichbleibenden Durchmesser aufweist und sich der Austrittsbereich konisch, insbesondere kegelstumpfförmig, zu einem Austritt hin aufweitet. Vorzugsweise ist der Strahlkanal in dem mittleren Führungsbereich zylindrisch, insbesondere kreiszylindrisch, ausgebildet. Vorzugsweise grenzt der Austrittsbereich direkt an den Führungsbereich an, wobei der geringste Durchmesser des Austrittsbereichs, insbesondere an einem an den Führungsbereich angrenzenden Ende, bevorzugt einem Durchmesser des Führungsbereichs entspricht. Der Austrittsbereich ist entlang der Längsachse insbesondere konisch. Bevorzugt weist der Strahlkanal in dem Austrittsbereich eine Kegelstumpfform auf. Es wäre jedoch auch denkbar, dass der Durchmesser des Strahlkanals in dem Austrittsbereich nicht kontinuierlich, sondern beispielsweise parabolisch oder hyperbolisch zunimmt. Insbesondere wäre auch denkbar, dass der Strahlkanal in dem Austrittsbereich beispielsweise eine hyperbolische Trichterform aufweist. Es sind jedoch auch andere, einem Fachmann als sinnvoll erscheinende, insbesondere konische, Formen für den Austrittsbereich denkbar. Vorzugsweise ist der Strahlkanal in dem Austrittsbereich von dem Führungsbereich bis zu einer Austrittsöffnung konisch ausgebildet. Dadurch kann insbesondere eine vorteilhafte Strahlführung ermöglicht werden. Insbesondere kann eine Korona- oder Spotbildung auf dem Werkstück zuverlässig vermieden werden. Durch den Austrittsbereich des Strahlkanals kann insbesondere ein vorteilhaft homogenes Strahlbild erreicht werden. Durch das homogene Strahlbild kann insbesondere eine Schädigung des Werkstücks vermieden werden. Es können insbesondere Spots vermieden werden.

Des Weiteren wird vorgeschlagen, dass eine Seitenwand des Austrittsbereichs des Strahlkanals gegenüber einer Mittelachse des Strahlkanals einen Winkel von zumindest 2° aufweist. Vorzugsweise weist die konische, insbesondere kegelstumpfförmige, Wandung des Strahlkanals in dem Austrittsbereich einen Öffnungswinkel von zumindest 5°, vorzugsweise zumindest 6° und besonders bevorzugt zumindest 7° auf. Der Öffnungswinkel ist insbesondere größer gleich 7°. Bei hohen Geschwindigkeiten führt der konische Bereich im Gegensatz zu einer zylindrischen Bohrung insbesondere eher zu einer Beschleunigung des Strahlguts, insbesondere des Luft-Strahlgut-Gemischs. Hierdurch kann wiederum ein Arbeitsdruck gesenkt werden. Ferner kann durch den Austrittsbereich des Strahlkanals insbesondere ein vorteilhaft homogenes Strahlbild erreicht werden.

Es wird ferner vorgeschlagen, dass sich der Austrittsbereich über zumindest 15% einer axialen Erstreckung des Strahlkanals erstreckt. Vorzugsweise erstreckt sich der Austrittsbereich über zumindest 20%, bevorzugt über zumindest 25% einer axialen Erstreckung des Strahlkanals. Bevorzugt ist der gesamte Austrittsbereich konisch geformt. Besonders bevorzugt erstreckt sich ein konischer Bereich des Strahlkanals über zumindest 20%, bevorzugt über zumindest 25% einer axialen Erstreckung des Strahlkanals. Dadurch kann insbesondere ein vorteilhaftes Strahlverhalten erreicht werden. Durch die Länge des Austrittsbereichs kann insbesondere ein vorteilhaft homogenes Strahlbild erreicht werden.

Es wird weiter vorgeschlagen, dass das Düsenelement zumindest ein Verstellelement aufweist, welches zu einer variablen Verstellung einer Kontur des Strahlkanals vorgesehen ist. Vorzugsweise ist das Verstellelement dazu vorgesehen, abhängig von einem Betriebszustand und/oder abhängig von Strahlgut, eine Form des Austrittsbereichs zu verändern. Mittels des Verstellelements kann beispielsweise ein Durchmesser, eine Konizität und/oder eine Länge des Austrittsbereichs verändert werden. Das Verstellelement ist insbesondere zu einer mechanischen Verstellung des Austrittsbereichs vorgesehen. Vorzugsweise weist das Verstellelement zumindest ein Antriebselement zu einer Verstellung einer Kontur des Strahlkanals auf. Das Verstellelement kann zu einer Verstellung der Kontur des Strahlkanals beispielsweise eine den Strahlkanal teilweise ausbildende Membran aufweisen, welche von einer dem Strahlkanal abgewandten Rückseite, beispielsweise mittels eines Fluids in seiner Form verändert werden kann. Alternativ oder zusätzlich wäre auch denkbar, dass das Verstellelement einen Irisblendenmechanismus aufweist, über den zumindest ein Durchmesser des Strahlkanals verändert werden kann. Alternativ oder zusätzlich wäre auch denkbar, dass das Verstellelement einen Teleskopmechanismus aufweist, über welchen eine Länge des Austrittsbereichs oder eine Länge des Führungsbereichs verändert werden kann. Dadurch kann insbesondere ein vorteilhaft variables Düsenelement bereitgestellt werden.

Des Weiteren wird vorgeschlagen, dass das Verstellelement in zumindest einem Betriebszustand zu einer variablen Verstellung eines Durchmessers des Austrittsbereichs des Strahlkanals vorgesehen ist. Vorzugsweise ist das Verstellelement dazu vorgesehen, einen Austrittsdurchmesser des Austrittsbereichs des Strahlkanals variabel einzustellen. Insbesondere ist das Verstellelement dabei dazu vorgesehen, eine Konizität, insbesondere einen Öffnungswinkel, des Austrittsbereichs zu verändern. Ein Eingangsdurchmesser des Strahlkanals in dem Austrittsbereich bleibt dabei insbesondere unverändert. Das Verstellelement bildet in dem Austrittsbereich insbesondere eine Außenwand des Strahlkanals aus, wobei die Außenwand von einem verstellbaren Kegelstumpf gebildet ist. Dadurch kann insbesondere ein vorteilhaft variables Düsenelement bereitgestellt werden.

Es wird ferner vorgeschlagen, dass der Strahlkanal einen gekrümmten, insbesondere einen mehrfach gekrümmten Verlauf aufweist. Vorzugsweise weist der Strahlkanal in zumindest einem Bereich, insbesondere in einem Austrittsbereich eine von null verschiedene Krümmung auf. Vorzugsweise weist eine Mittelachse und/oder eine Mittelfaser des Strahlkanals einen zumindest teilweise von einer Gerade verschiedenen, insbesondere gekrümmten Verlauf. Der Verlauf kann dabei insbesondere ein- oder mehrfach gekrümmt sein und/oder ein oder mehrere Abknickungen aufweisen. Vorzugsweise weist der Verlauf mehrere entgegengesetzte Krümmungen auf, sodass ein wellenlinienförmiger Verlauf entsteht. Die Krümmungen des Strahlkanals gehen insbesondere kontinuierlich ineinander über. Die Krümmungen können dabei jeweils lediglich in einer Ebene erfolgen, es wäre jedoch auch denkbar, dass die Krümmungen in mehreren Ebenen erfolgen. Dadurch kann insbesondere ein vorteilhaftes Strahlverhalten ermöglicht werden. Es kann in einem Betrieb insbesondere ein vorteilhaft gleichmäßiger Strahl bereitgestellt werden. Insbesondere kann eine Korona- oder Spotbildung auf dem Werkstück zuverlässig vermieden werden.

Ferner wird ein Tast- und/oder Abstandselement einer zuvor beschriebenen Strahleinheit vorgeschlagen. Vorzugsweise weist das Tast- und/oder Abstandselement alle zuvor beschriebenen Merkmale des Tast- und/oder Abstandselements einer Strahleinheit auf. Vorzugsweise ist das Tast- und/oder Abstandselement wechselbar ausgebildet. Dadurch kann insbesondere eine vorteilhafte Wartung des Tast- und/oder Abstandselements der Strahleinheit erreicht werden.

Ferner geht die Erfindung aus von einer Strahlvorrichtung, insebsondere Dentalstrahlvorrichtung, mit zumindest einer zuvor beschriebenen Strahleinheit und mit zumindest einer Werkstückhalteeinheit, welche zu einer Fixierung des zumindest einen Werkstücks und/oder der Apparatur während eines Strahlvorgangs ausgebildet ist. Unter einer "Werkstückhalteeinheit" soll in diesem Zusammenhang insbesondere eine Einheit verstanden werden, welche das Werkstück und/oder die Apparatur während eines Bearbeitungsschritts fixiert. Vorzugsweise weist die Werkstückhalteeinheit eine plastische Masse auf, welche das Werkstück und/oder die Apparatur auf einer Bearbeitungsplatte fixiert. Alternativ kann die Werkstückhalteeinheit manuell ausgebildet sein, wobei ein Bediener das Werkstück und/oder die Apparatur in der Hand führt. Ferner weist die Werkstückhalteeinheit eine Schlinge auf, welche das Werkstück und/oder die Apparatur auf einer Bearbeitungsplatte fixiert. Alternativ sind auch andere, einem Fachmann als sinnvoll erscheinende Ausführungen der Werkstückhalteeinheit denkbar. Dadurch kann insbesondere eine vorteilhafte stabile Werkstückhalteeinheit gewährleistet werden.

Des Weiteren geht die Erfindung aus von einem Verfahren zu einem Betrieb einer erfindungsgemäßen Strahleinheit einer Strahlvorrichtung. Es wird vorgeschlagen, dass in zumindest einem Strahlschritt das Tast- und/oder Abstandselement zur Einhaltung eines Mindestabstands eingesetzt wird. Vorzugsweise wird der Fortsatz des Tast- und/oder Abstandselements zur Einhaltung eines Mindestabstands genutzt. Mittels des Fortsatzes des Tast- und/oder Abstandselements wird in einem Strahlschritt insbesondere ein Mindestabstand der Auslassöffnung des Düsenelements überwacht. Vorzugsweise wird über die Länge des Fortsatzes der Mindestabstand festgelegt. Alternativ können Tast- und/oder Abstandselemente mit unterschiedlichen Längen des Fortsatzes für eine Einsatzvariabilität genutzt werden. Vorzugsweise wird über den Mindestabstand garantiert, dass die Strahleinheit keine aggressive und/oder zerstörende Wirkung auf die Oberfläche des insbesondere dentalen, Werkstücks und/oder einer Apparatur besitzt. Insbesondere wird in einem Strahlschritt ein, insbesondere dentales, Werkstück und/oder die Apparatur mittels einer Strahleinheit durch einen Strahlprozess bearbeitet wird. Vorzugsweise wird der Strahlschritt einstufig ausgeführt. Ferner wird der Strahlschritt mehrstufig ausgeführt. Dadurch kann insbesondere eine vorteilhafte Einsatzsicherheit und Qualitätsüberwachung gewährleistet werden.

Es wird ferner vorgeschlagen, dass in zumindest einem Wartungsschritt das Tast- und/oder Abstandselement werkzeuglos ausgetauscht wird. Unter einem "Wartungsschritt" soll in diesem Zusammenhang insbesondere ein Verfahrensschritt verstanden werden, welcher eine Abnutzung des Tast- und/oder Abstandselements überwacht und in welchem falls notwendig das abgenutzte Tast- und/oder Abstandselement durch ein neues Tast- und/oder Abstandselement ausgetauscht wird. Vorzugsweise wird das Tast- und/oder Abstandselement ausgetauscht, wenn eine Abnutzung zu erkennen ist. Alternativ ist auch ein Austausch des Tast- und/oder Abstandselements nach einer definierten Anzahl an Strahlschrittzyklen denkbar. Ferner ist auch ein Austausch nach jedem Strahlschritt denkbar. Vorzugsweise wird in einem Wartungsschritt die Koppelstelle zwischen dem Tast- und/oder Abstandselement und dem Düsenelement entkoppelt. Vorzugsweise wird nach dem Entkoppeln des abgenutzten Tast- und/oder Abstandselements, ein neues Tast- und/oder Abstandselement mit dem Düsenelement gekoppelt. In einem Ausführungsbeispiel wird zu einem Entkoppeln des abgenutzten Tast- und/oder Abstandselements, in einem ersten Schritt das Halteelement gelöst. Infolge wird insbesondere das abgenutzte Tast- und/oder Abstandselement von dem Düsenelement entkoppelt und ein neues Abstandelement an das Düsenelement gekoppelt. In einem letzten Schritt des Wartungsschritts wird hierbei insbesondere die Kopplung des neuen Tast- und/oder Abstandselements mit dem Düsenelement über das Halteelement fixiert. Dadurch kann insbesondere eine vorteilhafte Einsatzsicherheit und Qualitätsüberwachung erreicht werden. Es kann insbesondere eine gleichbleibende Sicherheit gewährleistet werden.

Des Weiteren wird vorgeschlagen, dass in zumindest einem Voreinstellungsschritt insbesondere vor dem Strahlschritt Parameter manuell, teilautomatisiert und/oder vollautomatisiert eingerichtet werden. Unter einem "Voreinstellungsschritt" soll in diesem Zusammenhang insbesondere ein Verfahrensschritt verstanden werden, in welchem die Prozessparameter und/oder das Strahlmittel eingestellt wird. Vorzugsweise wird in einem Voreinstellungsschritt ein definierter Druck der Strahleinheit von vorzugsweise maximal 1 bar, bevorzugt zumindest 0,75 bar und besonders bevorzugt von zumindest 0,5 bar eingestellt. Vorzugsweise wird in einem Voreinstellungsschritt die Strahldauer des Strahlschritts definiert und eingestellt. Vorzugsweise wird in einem Voreinstellungsschritt das Strahlträgermedium ausgewählt. Bei der Auswahl des Strahlmediums wird insbesondere zwischen der Mischung der Strahlkornmaterialien, der Partikelmenge im Verhältnis zu einem Volumenstrom, der Korngröße und/oder Konform unterschieden. Bei der Auswahl der Mischung der Strahlkornmaterialien kann beispielsweise eine Mischung aus AL2O3, SIO2 und Zirkon genutzt werden. Alternativ sind auch noch andere, einem Fachmann als sinnvoll erscheinende Mischungen der Strahlkornmaterialien denkbar. Bei der Auswahl der Kornform wird vorzugsweise eine runde Kornform gewählt, welche schonend im Strahlbetrieb eingesetzt werden kann. Alternativ sind auch noch andere, einem Fachmann als sinnvoll erscheinende Kornformen denkbar. Ferner kann auch eine Relativbewegung der Werkzeughalterung zu der Strahleinheit vorab definiert und durchgeführt werden. Dadurch kann insbesondere eine vorteilhafte Qualitätsüberwachung erreicht werden. Es kann insbesondere eine gleichbleibende Qualität gewährleistet werden.

Es wird ferner vorgeschlagen, dass in zumindest einem Strahlschritt das Tast- und/oder Abstandselement als Führungshilfe zum Abfahren von Geometrien eingesetzt wird. Vorzugsweise wird mit dem Tast- und/oder Abstandselement als Führungshilfe ein gleichbleibender Mindestabstand beim Abfahren einer Geometrie erreicht. Insbesondere wird, dadurch dass das Tast- und/oder Abstandselement als Führungshilfe eingesetzt wird, eine kontrollierte und vereinfachte Bearbeitung ermöglicht. Dadurch kann insbesondere eine vereinfachte Bearbeitung im Strahlschritt erreicht werden. Es kann insbesondere eine gleichbleibende Qualität gewährleistet werden.

Des Weiteren wird vorgeschlagen, das in zumindest einem Strahlschritt mittels des Tast- und/oder Abstandselements Geometriedaten während des Abfahrens eines, insbesondere dentalen, Werkstücks und/oder einer Apparatur ermittelt werden. Vorzugsweise werden die Geometriedaten des, insbesondere dentalen, Werkstücks und/oder einer Apparatur mittels Abstands und/oder Längenmessungen ermittelt. Besonders bevorzugt werden Längen und/oder Abstandswerte ermittelt. Vorzugsweise werden die Geometriedaten in einem konstanten Abstand ermittelt. Besonders bevorzugt werden in einem Strahlschritt Geometriedaten ermittelt, wenn eine Änderung der Geometriedaten auftritt. Alternativ wird in einem Strahlschritt eine dauerhafte Ermittlung der Geometriedaten durchgeführt. Dadurch kann insbesondere eine vereinfachte Bearbeitung im Strahlschritt erreicht werden. Es kann insbesondere eine gleichbleibende Qualität gewährleistet werden.

Gemäß einer weiteren Ausgestaltung wird vorgeschlagen, in zumindest einem Strahlschritt die durch das Tast- und/oder Abstandselement ermittelten Geometriedaten an eine Steuerungs- und/oder Regelungseinheit weitergleitet werden, wobei mittels der an die Steuerungs- und/oder Regelungseinheit übermittelten Geometriedaten ein automatischer Betrieb durchgeführt wird. Vorzugsweise werden ermittelte Geometriedaten des, insbesondere dentalen, Werkstücks und/oder einer Apparatur an die Steuerungs- und/oder Regelungseinheit übertragen. Vorzugsweise werden in einem Strahlschritt Geometriedaten mittels der Steuerungs- und/oder Regelungseinheit gespeichert. Vorzugsweise wird in einem Strahlschritt eine automatisierte Bearbeitung durchgeführt. Vorzugsweise wird in einem Strahlschritt die automatisierte Bearbeitung durch die Steuerungs- und/oder Regelungseinheit anhand der Geometriedaten gesteuert. Ferner wird eine die automatisierte Bearbeitung des, insbesondere dentalen, Werkstücks und/oder einer Apparatur durch die Steuerungs- und/oder Regelungseinheit anhand der gespeicherten Geometriedaten gesteuert. Dadurch kann insbesondere eine automatisierte Bearbeitung bereitgestellt werden. Es kann insbesondere eine gleichbleibende Qualität gewährleistet werden.

Ferner ist denkbar, dass in zumindest einem Strahlschritt eine Abschattung mittels des Tast- und/oder Abstandselements durchgeführt wird. Vorzugsweise wird mittels der Abschattung der Wirkungsbereich der Strahleinheit begrenzt. Insbesondere wird in einem Strahlschritt nur die Bearbeitungsoberfläche angeraut. Beispielsweise werden Kronenränder vor einer Beschädigung durch die Strahleinheit mittels der Abschattung durch das Tast- und/oder Abstandselement geschützt. Dadurch kann insbesondere ein Schutz von außerhalb der Bearbeitungsfläche liegenden Flächen erreicht werden. Es kann insbesondere eine vorteilhafte Qualität und eine vorteilhafte Zeitersparnis erreicht werden.

Es wird ferner vorgeschlagen, dass in zumindest einem Fixierschritt, insbesondere vor dem Strahlschritt, das, insbesondere dentale, Werkstück und/oder die Apparatur mittels einer plastischen Masse und/oder manuell und/oder einer Schlinge mit der Werkstückhalteeinheit verbunden wird. Unter einem "Fixierschritt" soll in diesem Zusammenhang insbesondere ein Verfahrensschritt verstanden werden, in welchem ein, insbesondere dentales, Werkstück und/oder eine Apparatur auf einer Werkstückhalteeinheit fixiert wird. Vorzugsweise wird mittels der Werkstückhalteeinheit eine lösbare Fixierung des, insbesondere dentalen, Werkstücks und/oder der Apparatur erreicht. Insbesondere wird in einem Fixierschritt das, insbesondere dentale, Werkstück und/oder die Apparatur werkzeuglos fixiert. Ferner wird in einem Fixierschritt das, insbesondere dentale, Werkstück und/oder die Apparatur mit einem Werkzeug auf der Werkstückhalteeinheit fixiert. Dadurch kann insbesondere eine vorteilhaft sichere Fixierung des, insbesondere dentalen, Werkstücks und/oder der Apparatur auf einer Werkstückhalteeinheit erreicht werden. Es kann insbesondere eine vorteilhafte Haltungssicherheit während des Strahlschritts bereitgestellt werden.

Des Weiteren wird vorgeschlagen, dass in zumindest einem Qualitätsüberprüfungsschritt, insbesondere vor dem Strahlschritt, eine Pigmentschicht aufgebracht wird, wobei in zumindest einem Qualitätsüberprüfungsschritt nicht bestrahlte Oberflächen durch die Pigmentschicht optisch kenntlich dargestellt werden. Unter einem "Qualitätsüberprüfungsschritt" soll in diesem Zusammenhang insbesondere ein Verfahrensschritt verstanden werden, welcher die Qualität des Strahlschritts bewertet. Vorzugsweise wird in einem Qualitätsprüfungsschritt ein optischer Unterschied zwischen einer mittels eines Strahlschritts und einer nicht bearbeiteten Oberfläche kenntlich dargestellt. Vorzugsweise wird hierfür insbesondere vor dem Strahlschritt eine Pigmentschicht auf die Oberfläche des, insbesondere dentalen, Werkstücks und/oder der Apparatur aufgebracht. Insebsondere wird in einem Qualitätsprüfungsschritt eine Qualität an einem Prinzip der Elementaraussage bewertet. Unter einer "Pigmentschicht" soll in diesem Zusammenhang insbesondere eine dünne eingefärbte und/oder fluoreszierende Schicht verstanden werden. Dadurch kann insbesondere vorteilhaft eine einfache Auskunft über den Zustand einer Oberfläche getroffen werden. Es kann insbesondere eine vorteilhafte Qualitätsüberwachung erreicht werden.

Es wird ferner vorgeschlagen, dass in zumindest einem Qualitätsüberprüfungsschritt, insbesondere nach dem Strahlschritt, das, insbesondere dentale, Werkstück und/oder die Apparatur mittels einer Prüfvorrichtung, insbesondere optische Prüfvorrichtung, bewertet wird, Vorzugsweise wird mit der Prüfvorrichtung ein optischer Unterschied zwischen einer bearbeiteten Oberfläche und einer nicht bearbeiteten Oberfläche verdeutlicht. Insbesondere wird duch die optische Prüfvorrichtung die Darstellung einer Pigmentschicht verdeutlicht. Ferner können Messdaten mit der Prüfvorrichtung als Datei gesichtet werden. Dadurch kann insbesondere vorteilhaft eine einfache Auskunft über den Zustand einer Oberfläche getroffen werden. Es kann insbesondere eine vorteilhafte Qualitätsüberwachung erreicht werden.

Ferner wird eine Prüfvorrichtung zur Durchführung eines Qualitätsüberprüfungsschritts der zuvor beschriebenen Strahleinheit einer Strahlvorrichtung vorgeschlagen. Es wird vorgeschlagen, dass die Prüfvorrichtung mittels einer optischen Prüfvorrichtung ausgebildet ist. Vorzugsweise weist die optische Prüfvorrichtung eine UV-Lampe, eine Lupe und/oder eine Kamera auf. Unter einer "optischen Prüfvorrichtung" soll in diesem Zusammenhang insbesondere eine Vorrichtung verstanden werden, mit welcher mittels einer optischen Prüfung eine Oberfläche eines insbesondere dentalen, Werkstücks und/oder einer Apparatur ausgewertet werden kann. Alternativ sind auch andere einem Fachmann als sinnvoll erscheinende Ausführungen einer optischen Prüfvorrichtung denkbar. Ferner ist ein Auswertungsprogram denkbar, welches die ermittelten Daten der Kamera in Verbindung mit der UV-Lampe, halb- oder vollautomatisch auswertet und die Qualität des Strahlschritts bewerten. Vorzugsweise ist die optische Prüfvorrichtung als Bestandteil einer Strahlvorrichtung ausgebildet. Ferner ist denkbar, dass die optische Prüfvorrichtung unabhängig von einer Strahlvorrichtung ausgebildet ist. Dadurch kann insbesondere eine vorteilhafte einfach zu bedienende optische Prüfvorrichtung bereitgestellt werden.

Die erfindungsgemäße Strahleinheit für eine Strahlvorrichtung, insbesondere Dentalstrahlvorrichtung, sowie das Verfahren soll hierbei nicht auf die oben beschriebene Anwendung und Ausführungsform beschränkt sein. Insbesondere können die erfindungsgemäße Strahleinheit für eine Strahlvorrichtung, insbesondere Dentalstrahlvorrichtung, sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine Strahlvorrichtung, insbesondere Dentalstrahlvorrichtung in einer schematischen Darstellung,
- Fig. 2: eine erfindungsgemäße Strahleinheit für die Strahlvorrichtung, insbesondere Dentalstrahlvorrichtung, mit einem Düsenelement in einer schematischen Darstellung,
- Fig. 3: das Düsenelement mit einem Strahlkanal in einer schematischen Schnittdarstellung,
- Fig. 4: ein schematisches Ablaufdiagramm eines Verfahrens zu einem Betrieb der erfindungsgemäßen Strahleinheit der Strahlvorrichtung,
- Fig. 5: eine alternativ erfindungsgemäße Strahleinheit mit einer Ausführung eines Tast- und/oder Abstandselements als Abschattungselement und mit einem Düsenelement in einer schematischen Darstellung,
- Fig. 6: das Düsenelement der alternativen erfindungsgemäßen Strahleinheit mit einem Strahlkanal in einer schematischen Schnittdarstellung,
- Fig. 7: ein alternatives Ausführungsbeispiel eines Abstandelements einer weiteren alternativen erfindungsgemäßen Strahleinheit in einer schematischen Darstellung,
- Fig. 8: ein weiteres alternatives Ausführungsbeispiel eines Tast- und/oder Abstandelements einer weiteren alternativen erfindungsgemäßen Strahleinheit in einer schematischen Darstellung,
- Fig. 9: ein weiteres alternatives Ausführungsbeispiel eines Tast- und/oder Abstandelements einer weiteren alternativen erfindungsgemäßen Strahleinheit in einer schematischen Darstellung,
- Fig. 10: ein alternatives schematisches Ablaufdiagramm eines Verfahrens zu einem Betrieb einer weiteren alternativen erfindungsgemäßen Strahleinheit einer Strahlvorrichtung und
- Fig. 11: ein Düsenelement einer weiteren alternativen erfindungsgemäßen Strahleinheit mit einem Strahlkanal in einer schematischen Schnittdarstellung.

### Beschreibung der Ausführungsbeispiele

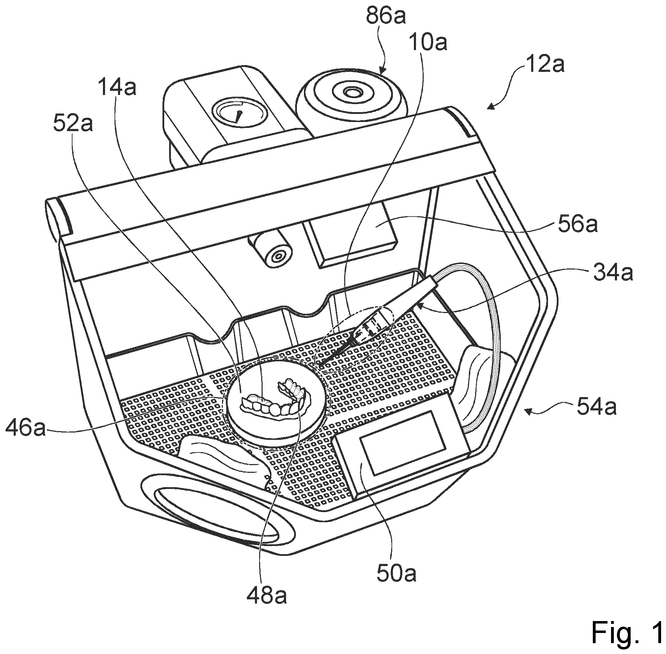

Fig. 1 zeigt eine Strahlvorrichtung 12a, insbesondere Dentalstrahlvorrichtung, mit einer Strahleinheit 10a und mit einer Werkstückhalteeinheit 46a, welche zu einer Fixierung zumindest einen Werkstücks und/oder einer Apparatur 14a während eines Strahlvorgangs ausgebildet ist. Die Strahlvorrichtung 12a ist zu einer Bearbeitung eines, insbesondere dentalen, Werkstücks und/oder einer Apparatur 14a mittels eines Strahlprozesses vorgesehen. Die Strahlvorrichtung 12a ist mehrteilig ausgebildet. Die Strahlvorrichtung 12a ist zu einem Ausstrahlen von Strahlgut, insbesondere aus einem Strahlguttank 86a, bevorzugt in einer Strahlkammer 54a vorgesehen. Das Strahlgut wird über die Strahleinheit 10a ausgestrahlt. Die Strahlkammer 54a ist in einem Zustand abgeschlossen ausgebildet. Die Strahlkammer 54a definiert einen Arbeitsbereich eines Bedieners und ist dazu vorgesehen, ein unkontrolliertes Umherfliegen von Strahlgut zu verhindern. Die Strahlvorrichtung 12a weist eine Reinigungs- und Desinfektionseinheit 56a auf, welche zu einer Reinigung- und Desinfektion der Bearbeitungsfläche eingesetzt wird. Die Reinigungs- und Desinfektionseinheit 56a ist in einem Nahbereich der Strahleinheit 10a angeordnet. Beispielsweise ist die Reinigungs- und Desinfektionseinheit 56a als UV-Lampe und/oder Absaugeinheit und/oder Sprüheinheit ausgebildet. Alternativ sind auch alle anderen einem Fachmann als sinnvoll erscheinenden Auführungen einer Reinigungs- und Desinfektionseinheit 56a denkbar. Die Werkstückhalteeinheit 46a weist eine plastischer Masse 48a auf, welche das Werkstück und/oder die Apparatur 14a auf einer Bearbeitungsplatte 52a fixiert. Alternativ kann die Werkstückhalteeinheit 46a manuell ausgebildet sein, wobei ein Bediener das Werkstück und/oder die Apparatur 14a in der Hand führt. Ferner weist die Werkstückhalteeinheit 46a eine Schlinge auf, welche das Werkstück und/oder die Apparatur 14a auf einer Bearbeitungsplatte 52a fixiert. Alternativ sind auch andere, einem Fachmann als sinnvoll erscheinende Ausführungen der Werkstückhalteeinheit 46a denkbar. (siehe Fig.1)

Ferner weist die Strahlvorrichtung 12a eine Prüfvorrichtung 50a zur Duchführung eines Qualitätsüberprüfungsschritts 98 auf. Die Prüfvorrichtung 50a ist mittels einer optischen Prüfvorrichtung ausgebildet. Die optische Prüfvorrichtung 50a weist eine UV-Lampe, eine Lupe und/oder eine Kamera auf. Alternativ sind auch andere, einem Fachmann als sinnvoll erscheinende Ausführungen einer optischen Prüfvorrichtung 50a denkbar. Ferner ist ein Auswertungsprogram denkbar, welches die ermittelten Daten der Kamera in Verbindung mit der UV-Lampe, halb- oder vollautomatisch auswerten und die Qualität des Strahlschritts bewerten kann. Die optische Prüfvorrichtung 50a als Bestandteil ist in einer Strahlvorrichtung 12a ausgebildet. Ferner ist denkbar, dass die optische Prüfvorrichtung 50a unabhängig von einer Strahlvorrichtung 12a ausgebildet ist. (siehe Fig.1)

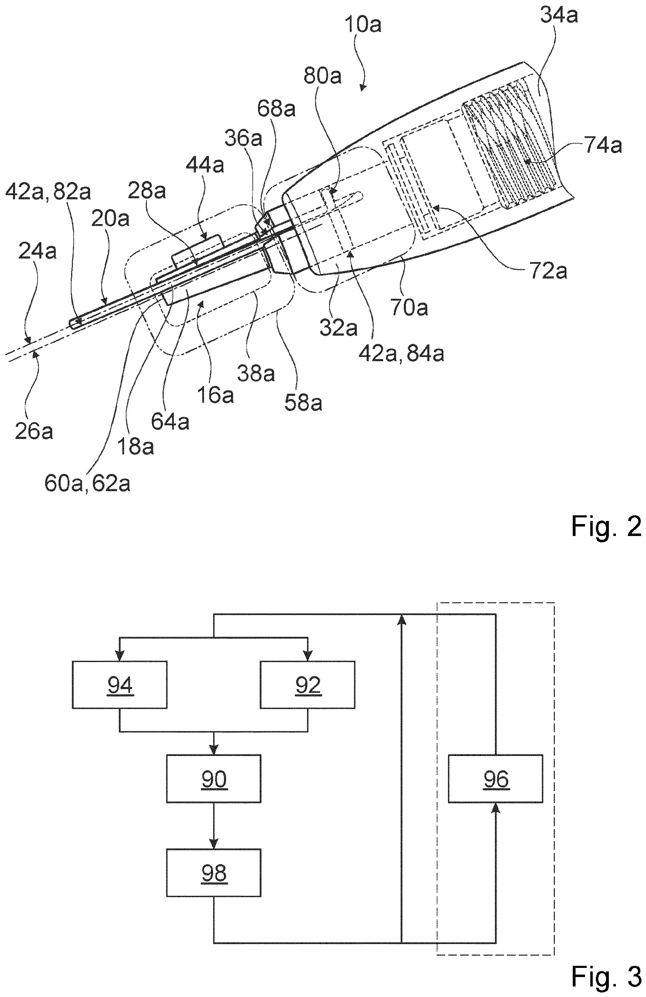

Weiter weist die Strahlvorrichtung 12a, insbesondere Dentalstrahlvorrichtung 12a, eine Strahleinheit 10a auf, welche zu einer Aufrauung einer Oberfläche eines, insbesondere dentalen, Werkstücks und/oder einer Apparatur 14a vorgesehen ist. Die Strahleinheit 10a ist dazu vorgesehen eine Innenseite, des, insbesondere dentalen, Werkstücks und/oder einer Apparatur 14a als Vorbereitung für eine Klebefläche aufzurauen. Durch die Strahleinheit 10a wird eine Oberfläche als Vorbereitung für eine Klebefläche angeraut. Die Strahleinheit 10a wird an einer Innenseite der dentalen/prothetischen Restauration eingesetzt. Alternativ ist auch der Einsatz an anderen, einem Fachmann als sinnvoll erscheinenden dentalen Werkstücken denkbar. Die Strahleinheit 10a ist mehrteilig ausgebildet. Alternativ ist auch eine einteilige Ausführung der Strahleinheit 10a denkbar. Die Bewegung der Strahleinheit 10a wird manuell gesteuert. Alternativ ist es denkbar, dass die Bewegung der Strahleinheit 10a teilautomaisiert oder vollautomatisiert gesteuert wird. Die Strahleinheit 10a ist zu einer Erzeugung eines Strahls vorgesehen. Die Strahleinheit 10a weist eine variabele Einstellbarkeit des Auftreffswinkels des Strahls der Strahleinheit 10a auf der Bearbeitungsoberfläche auf. Der Auftreffwinkel ist manuell steuerbar. Alternativ ist auch eine teilautomatisierte oder vollautomatisierte Steuerung des Auftreffwinkels denkbar. Die Strahleinheit 10a ist für eine Erzeugung eines Drucks von maximal 1 bar vorgesehen. (siehe Fig. 1 und 2)

Die Strahleinheit 10a weist zumindest ein Düsenelement 16a auf, welches zu einem gezielten Ausbringen eines, insbesondere abrasiven, Strahls, insbesondere zu einem Innenstrahlen eines dentalen Werkstücks und/oder einer dentalen Apparatur 14a vorgesehen ist. Das Düsenelement 16a ist zu einer Beeinflussung der Geschwindigkeit und des statischen Drucks eines Fluids und/oder einer Fluid-Zusatzstoff Mischung vorgesehen. Teilweise wird während eines Betriebs Strahlgut, insbesondere ein Luft-Strahlgut-Gemisch, über das Düsenelement 16a ausgestrahlt. Das Düsenelement 16a weist eine Querschnittsverengung 58a auf.

Alternativ ist auch ein Düsenelement 16a mit mehreren Querschnittsverengungen 58a denkbar. Das Düsenelement 16a ist aus einem metallischen Werkstoff ausgebildet. Alternativ ist auch ein anderes, einem Fachmann als sinnvoll erscheinendes Material des Düsenelements 16a, beispielsweise ein Kunststoffmaterial, denkbar. Das Düsenelement 16a ist einteilig ausgebildet. Alternativ ist auch eine mehrteilige Ausführung des Düsenelements 16a denkbar. Das Düsenelement 16a bündelt das Fluid und/oder die Fluid-Zusatzstoff-Mischung zu einem Strahl. Das Düsenelement 16a weist eine Auslassöffnung 60a auf. Die Auslassöffnung 60a ist in einer Endfläche 62a in Haupterstreckungsrichtung des Düsenelements 16a ausgebildet. Das Düsenelement 16a ist als Zylinder, insbesondere Hohlzylinder, mit zumindest einer Querschnittsverengung 58a der Außenwandung 64a und einer Innenwandung 66a ausgebildet. Alternativ sind auch mehrere Querschnittsverengungen 58a der Außenwandung 64a und die Innenwandung 66a denkbar. Ferner ist auch eine andere, einem Fachmann als sinnvoll erscheinende räumliche geometrische Form des Düsenelements 16a, beispielsweise ein Quader und/oder ein Kegel denkbar. Das Düsenelement 16a weist eine Abschrägung 68a von einem Querschnitt 70a zu einer Querschnittverengung 58a auf. Der Querschnitt 70a der Querschnittverengung 58a verengt sich im Verlaufe der Haupterstreckungsrichtung in Richtung der Auslassöffnung 60a. (siehe Fig. 2)

Das Düsenelement 16a bildet einen Strahlkanal 110a aus, welcher einen sich entlang einer Längsachse 112a verändernden Durchmesser aufweist. Das Düsenelement 16a bildet den Strahlkanal 110a aus, welcher von einer entlang einer Haupterstreckungsrichtung des Düsenelements 16a durchgehenden Ausnehmung gebildet ist. Das Düsenelement 16a begrenzt den Strahlkanal 110a. Ein Ende des Strahlkanals 110a bildet einen Austritt 118a für das Strahlgut, insbesondere den abrasiven Strahl, aus. Das Düsenelement 16a bildet einen Teil eines Handteils der Strahleinheit 10a. Das Düsenelement 16a ist zu einer Beeinflussung der Geschwindigkeit und des statischen Drucks eines Fluids und/oder einer Fluid-Zusatzstoff Mischung vorgesehen. Die Längsachse des Strahlkanals 110a erstreckt sich parallel zu der Haupterstreckungsrichtung des Düsenelements 16a. Die Längsachse ist von einer Mittelachse 124a des Strahlkanals 110a gebildet. Der Strahlkanal 110a weist entlang der Längsachse zumindest zwei verschiedene Durchmesser auf. Der Strahlkanal 110a weist entlang der Längsachse eine Vielzahl verschiedener Durchmesser auf. Der Durchmesser des Strahlkanals 110a verändert sich kontinuierlich.

Der Strahlkanal 110a weist einen mittleren Führungsbereich 114a und einen Austrittsbereich 116a auf, wobei ein Durchmesser des Austrittsbereichs 116a, zumindest gemittelt, größer ist als ein Durchmesser d_{F} des mittleren Führungsbereichs 114a. Der Führungsbereich 114a und der Austrittsbereich 116a sind jeweils von einem axialen Bereich des Strahlkanals 110a gebildet. Der Austrittsbereich 116a und der Führungsbereich 114a erstrecken sich jeweils über zumindest 10%, vorzugsweise zumindest 15% und besonders bevorzugt zumindest 20% einer Längserstreckung des Strahlkanals 110a. Der Austrittsbereich 116a erstreckt sich über zumindest 15% einer axialen Erstreckung des Strahlkanals 110a. Der Austrittsbereich 116a erstreckt sich über zumindest annähernd 25% einer axialen Erstreckung des Strahlkanals 110a. Der Führungsbereich 114a erstreckt sich über zumindest 50% einer axialen Erstreckung des Strahlkanals 110a. Der Führungsbereich 114a erstreckt sich über zumindest annähernd 65% einer axialen Erstreckung des Strahlkanals 110a. Der Strahlkanal 110a weist entlang der Längsachse zusätzlich einen Eintrittsbereich 136a auf. Der Eintrittsbereich 136a grenzt auf einer dem Austrittsbereich 116a abgewandten Seite an den Führungsbereich 114a an. Der Austrittsbereich 116a umfasst den Austritt 118a des Strahlkanals 110a. Der Austrittsbereich 116a erstreckt sich entlang der Längserstreckung von dem Führungsbereich 114a bis zu der Austrittsöffnung des Austritts 118a des Strahlkanals 110a. Der Führungsbereich 114a erstreckt sich zumindest teilweise in einem mittleren Bereich des Strahlkanals 110a. Der Führungsbereich 114a nimmt einen längsten Abschnitt des Strahlkanals 110a ein. Ein mittlerer Durchmesser des Austrittsbereichs 116a ist größer als ein konstanter Durchmesser d_{F} des Führungsbereichs 114a. Der Durchmesser des Strahlkanals 110a ist in dem Austrittsbereich 116a in jedem Punkt größer als ein Durchmesser d_{F} des Strahlkanals 110a in dem Führungsbereich 114a. Der Führungsbereich 114a bildet einen Bereich des Strahlkanals 110a mit dem geringsten Durchmesser. Der Führungsbereich 114a ist von einem kreiszylindrischen Bereich gebildet. Der mittlere Führungsbereich 114a weist einen gleichbleibenden Durchmesser d_{F} auf.

Der Austrittsbereich 116a ist konisch ausgebildet. Der Austrittsbereich 116a des Strahlkanals 110a weitet sich konisch, insbesondere kegelstumpfförmig, zu einem Austritt 118a hin auf. Der Austrittsbereich 116a ist entlang der Längsachse konisch. Der Strahlkanal 110a weist in dem Austrittsbereich 116a eine Kegelstumpfform auf. Es wäre jedoch auch denkbar, dass der Durchmesser des Strahlkanals in dem Austrittsbereich nicht kontinuierlich, sondern beispielsweise parabolisch oder hyperbolisch zunimmt. Eine Seitenwand 122a des Austrittsbereichs 116a des Strahlkanals 110a weist gegenüber der Mittelachse 124a des Strahlkanals 110a einen Winkel von zumindest 2° auf. Die konische, insbesondere kegelstumpfförmige, Wandung des Strahlkanals 110a in dem Austrittsbereich 116a weist einen Öffnungswinkel ω von zumindest 5°, vorzugsweise zumindest 6° und besonders bevorzugt zumindest 7° auf. Der Öffnungswinkel ω ist insbesondere größer gleich 7°. Der Öffnungswinkel ω des Austrittsbereichs 116a beträgt beispielhaft genau 7°. Bei hohen Geschwindigkeiten führt der konische Bereich im Gegensatz zu einer zylindrischen Bohrung eher zu einer Beschleunigung des Strahlguts, insbesondere des Luft-Strahlgut-Gemischs.

Die Strahleinheit 10a ist von einem Handstück gebildet, das von einem Bediener zumindest teilweise während eines Betriebs geführt wird. Das Handstück ist durch eine Pistoleneinheit 34a ausgebildet. Die Pistoleneinheit 34a ist als längliches Bauteil ausgebildet. Die Pistoleneinheit 34a ist in einer Strahlkammer 54a ausgebildet. Alterativ ist auch eine Ausgestaltung der Pistoleneinheit 34a außerhalb einer Strahlkammer 54a denkbar. Die Pistoleneinheit 34a ist als Haltepunkt für einen Bediener ausgebildet. (siehe Fig. 1)

Das Düsenelement 16a ist mittels eines Halteelements 32a an einer Pistoleneinheit 34a befestigt ausgebildet. Das Düsenelement 16a ist mittels des Halteelements 32a lösbar an einer Pistoleneinheit 34a der Strahlvorrichtung 12a befestigt ausgebildet. Das Halteelement 32a ist dazu vorgesehen, unterschiedliche Ausführungen eines Düsenelements 16a an der Pistoleneinheit 34a zu befestigen. Die unterschiedlichen Düsenelemente 16a sind an ihrer Koppelstelle 72a mit der Pistoleneinheit 34a konstruktionsgleich ausgebildet. Alternativ wäre auch denkbar, dass das Halteelement 32a und das Düsenelement 16a einstückig ausgebildet sind. Das Halteelement 32a weist eine Verbindungstelle 74a mit der Pistoleneinheit 34a auf. Vorzugsweise ist die Verbindungstelle 74a als Schraubverbindung ausgebildet. Alternativ sind auch andere, einem Fachmann als sinnvoll erscheinende Ausführungen der Verbindungstelle 74a denkbar. Das Düsenelement 16a ist über einen Kraftschluss und/oder Formschluss zumindest teilweise zwischen der Pistoleneinheit 34a und dem Halteelement 32a angeordnet. Beispielsweise ist das Halteelement 32a als Überwurfmutter ausgebildet. (siehe Fig.1)

Die Strahleinheit 10a weist ein Tast- und/oder Abstandselement 18a auf, welches zur Einhaltung eines Mindestabstands, zwischen einem, insbesondere dentalen, Werkstück und/oder einer Apparatur 14a und dem zumindest einen Düsenelement 16a vorgesehen ist. Das Tast- und/oder Abstandselement 18a ist zu einer Überwachung eines Mindestabstands einer Spitze 38a eines Düsenelements 16a zu einer Bearbeitungsoberfläche ausgebildet. Der Mindestabstand beträgt zwischen der Spitze 38a der Düseneinheit 16a und der Oberfläche des, insbesondere dentalen, Werkstücks und/oder einer Apparatur 14a zumindest mindestens 20 mm, bevorzugt zumindest mindestens 15 mm, besonders bevorzugt zumindest mindestens 10 mm und zumindest maximal 40mm. Das Tast- und/oder Abstandselement 18a ist in einem Nahbereich des Düsenelements 16a angeordnet. Das Tast- und/oder Abstandselement 18a ist zumindest teilweise als längliches Bauteil ausgebildet. Das Tast- und/oder Abstandselement 18a ist einteilig ausgebildet. (siehe Fig. 2). Weiter weist das Tast- und/oder Abstandselement 18a eine Beschichtung auf. Die Beschichtung ist zu einem Schutz der Bearbeitungsfläche vorgesehen. Das Tast- und/oder Abstandselement 18a ist vollflächig beschichtet ausgebildet. Alternativ ist nur eine Berührungsfläche 78a des Tast- und/oder Abstandselements 18a beschichtet ausgebildet. Das Tast- und/oder Abstandselement 18a weist an einem Ende des Düsenelements 16a einen von dem Düsenelement 16a wegragenden Fortsatz 20a auf, wobei das Tast- und/oder Abstandselement 18a teilweise an einer Außenwandung 64a des Düsenelements 16a angeordnet ist. Der Fortsatz 20a ragt über das Ende des Düsenelements16a hinaus, welches die Auslassöffnung 60a aufweist. Vorzugsweise ist der Fortsatz 20a mit einer Länge von mindestens 20 mm, bevorzugt zumindest mindestens 15 mm, besonders bevorzugt zumindest mindestens 10 mm und zumindest maximal 40mm ausgebildet. Die Mantelfläche des von dem Düsenelement 16a wegragenden Fortsatzes 20a ist auf einer gedachten in Haupterstreckungsrichtung des Düsenelements 16a endlosen erstreckenden Mantelfläche der Außenwandung 64a angeordnet. Alternativ ist der von dem Düsenelement 16a wegragende Fortsatz 20a beabstandet zu einer gedachten in Haupterstreckungsrichtung des Düsenelements 16a endlosen erstreckenden Mantelfläche der Außenwandung 64a des Düsenelements 16a angeordnet. Alternativ beträgt der Abstand zwischen dem Fortsatz 20a und einer zylindrischen Ebene der Außenwandung 64a des Düsenelements 16a zumindest 3 mm, vorzugsweise maximal 2 mm und besonders bevorzugt zumindest 1 mm. Das Tast- und/oder Abstandselement 18a verläuft fließend übergangslos in den Fortsatz 20a über. Der Fortsatz 20a hat denselben Querschnitt senkrecht zu einer Haupterstreckungsrichtung wie das restliche Tast- und/oder Abstandselement 18a. (siehe Fig.2) Der Fortsatz 20a des Tast- und/oder Abstandselements 18a ist von einer sich im Wesentlichen parallel zu einer Haupterstreckungsrichtung des Düsenelements 16a erstreckenden Lanze gebildet ist. Die Lanze weist in Haupterstreckungsrichtung einen konstanten Querschnitt auf. Alternativ ist auch ein verjüngender Querschnitt in Richtung entgegengesetzt zum Düsenelement 16a denkbar. Die Lanze weist vorzugsweise eine kreisrunde Querschnittsform auf, in einer Ebene senkrecht zu einer Haupterstreckungsrichtung des Fortsatzes 20a und/oder des Düsenelements 16a auf. Alternativ ist in einem Querschnitt senkrecht zur Haupterstreckungsrichtung des Fortsatzes 20a auch eine ovale, rechteckige oder viereckige Form denkbar. Ferner sind auch andere, einem Fachmann als sinnvoll erscheinende Querschnittformen denkbar. (siehe Fig. 2) Der Fortsatz 20a des Tast- und/oder Abstandselements 18a weist eine Mittelachse 24a auf, welche sich zumindest im Wesentlichen parallel zu einer Haupterstreckungsrichtung des Düsenelements 16a erstreckt, wobei die Mittelachse 24a des Fortsatzes 20a, insbesondere der gesamte Fortsatz 20a, beabstandet von einer Strahlachse 26a des Düsenelements 16a angeordnet ist. Alternativ bilden die Mittelachse 24a des Fortsatzes 20a des Tast- und/oder Abstandselements 18a und die Strahlachse 26a des Düsenelements 16a insbesondere einen Winkel aus.

Weiter weist das Tast- und/oder Abstandselement 18a eine Koppelstelle 28a mit dem Düsenelement 16a auf. Das Tast- und/oder Abstandselement 18a ist direkt mit dem Düsenelement 16a koppelbar Die Koppelung zwischen dem Tast- und/oder Abstandselement und dem Düsenelement 16a an der Koppelstelle 28a ist als formschlüssige Verbindung ausgebildet. Alternativ ist auch eine kraftschlüssige Verbindung als Koppelstelle 28a zwischen dem Tast- und/oder Abstandselement 18a und dem Düsenelement 16a denkbar. Die Koppelstelle 28a ist auf einer Außenwandung 64a des Düsenelements 18a ausgebildet. Alternativ kann die Koppelstelle 28a auch innerhalb des Düsenelements 18a ausgebildet sein. Ferner ist auch eine andere, einem Fachmann als sinnvoll erscheinende Koppelstelle 28a zwischen dem Tast- und/oder Abstandselement 18a und dem Düsenelement 16a denkbar. Die Koppelstelle 28a ist über einen Teilbereich des Düsenelements 16a und des Abstandelements 18a ausgebildet. Die Koppelstelle 28a verbindet das Tast- und/oder Abstandselement 18a und das Düsenelement 16a und fixiert das Tast- und/oder Abstandselement 18a an dem Düsenelement 16a gegen eine von außen anliegende Kraft. Die Koppelung zwischen dem Tast- und/oder Abstandselement 18a und dem Düsenelement 16a an die Koppelstelle 28a ist als eine lösbare Verbindung ausgebildet. Die Koppelstelle 28a ist als mechanische Verbindung ausgebildet. Die lösbare Verbindung ist werkzeuglos lösbar ausgebildet. Alternativ ist auch eine lösbare Verbindung denkbar, welche mit einem Werkzeug lösbar ausgebildet ist. Die lösbare Verbindung wird durch eine kraftschlüssige und/oder formschlüssige Verbindung ausgebildet. Die Koppelstelle 28a ist als Ausnehmung 36a ausgebildet. Das Tast- und/oder Abstandselement 18a ist in der Ausnehmung 36a des Düsenelements 16a angeordnet und bildet die Koppelstelle 36a aus. (siehe Fig. 1) Die Düseneinheit 16a weist eine Ausnehmung 36a auf, in welcher das Tast- und/oder Abstandselement 18a angeordnet ist. Die Ausnehmung 36a ist parallel zu einer Haupterstreckungsrichtung des Düsenelements 16a ausgerichtet. Alternativ ist die Ausnehmung 36a des Düsenelements 16a entsprechend der Form und/oder der Ausrichtung des Tast- und/oder Abstandselements 18a auf. Das Düsenelement 16a weist eine weitere Ausnehmung 80a ausgebildet. Die weitere Ausnehmung 80a ist rechtwinklig zu der ersten Ausnehmung 36a angeordnet. Alternativ ist auch eine andere, einem Fachmann als sinnvoll erscheinende Ausrichtung der weiteren Ausnehmung 80a zu der ersten Ausnehmung 36a denkbar. Die weitere Ausnehmung 80a überschneidet die erste Ausnehmung 36a. Vorzugsweise weist das Tast- und/oder Abstandselement 18a eine rechtwinklige Abwinklung auf, welche auf die weitere Ausnehmung 80a angepasst ausgebildet ist. Das Tast- und/oder Abstandselement 18a weist eine erste Haupterstreckungsrichtung und eine zweite Haupterstreckungsrichtung auf. Vorzugsweise ist die erste Haupterstreckungsrichtung des Tast- und/oder Abstandselements 18a in einer ersten Ausnehmung 36a und die zweite Haupterstreckungsrichtung des Tast- und/oder Abstandselements 18a in einer weiteren Ausnehmung 80a angeordnet. Die weitere Ausnehmung 80a ist dazu vorgesehen, das Tast- und/oder Abstandselement 18a gegen eine Krafteinwirkung parallel zu einer Haupterstreckungsrichtung des Düsenelements 16a am Düsenelement 16a zu fixieren.

Die Strahlvorrichtung 12a weist ein Halteelement auf, wobei das Tast- und/oder Abstandselement 18a mittels des Halteelements 32a lösbar an dem Düsenelement 16a fixiert ausgebildet ist, wobei das Halteelement 32a dazu vorgesehen ist, mittels einer Schraubverbindung eine lösbare Verbindung mit einer Pistoleneinheit 34a der Strahleinheit auszubilden. Das Tast- und/oder Abstandselement 18a ist mittels einer formschlüssigen und/oder kraftschlüssigen Verbindungstelle über das Halteelement 32a an dem Düsenelement 16a lösbar fixiert. Das Halteelement 32a ist einteilig ausgebildet. Das Halteelement 32a fixiert das Tast- und/oder Abstandselement 18a an einem Düsenelement 16a und befestigt das Düsenelement 16a an einer Pistolenvorrichtung 34a. Das Halteelement 32a verbindet das Düsenelement 16a an einer Pistolenvorrichtung durch eine Presspassung. Das Halteelement 32a ist als Überwurfmutter ausgebildet. (siehe Fig. 2)

Weiter weist die Strahleinheit 10a eine Beleuchtungseinheit 42a auf. Mittels der Beleuchtungseinheit 42a wird ein definierter Bereich der Bearbeitungsfläche ausgeleuchtet. Die Beleuchtungseinheit 42a weist einen Lichtleiter 82a und eine Lichtquelle 84a auf. Die Lichtquelle 84a ist als LED-Element ausgebildet. Die Beleuchtungseinheit 42a ist in einem Nahbereich des Tast- und/oder Abstandselements 18a angeordnet. Die Beleuchtungseinheit 42a ist kontaktiert an dem Abstandelement 18a angeordnet. Die Beleuchtungseinheit 42a ist teilweise durch das Tast- und/oder Abstandselement 18a ausgebildet ist, wobei das Tast- und/oder Abstandselement 18a teilweise als Lichtleiter 82a ausgebildet ist. Die Lichtquelle 84a ist kontaktiert an den Lichtleiter 82a angeordnet. Die Lichtquelle 84a ist in einer Ausnehmung des Düsenelements 16a angeordnet.

Weiter weist die Strahleinheit 10a ein Laserelement 44a auf, welches dazu vorgesehen ist, mit überlagerten Laserstrahlen eine Geometrie abzufahren. Das Laserelement 44a ist in einem Nahbereich des Tast- und/oder Abstandselements 18a angeordnet. Das Laserelement 44a ist parallel zu einer Haupterstreckungsrichtung des Tast- und/oder Abstandselements 18a ausgerichtet angeordnet.

Fig.3 zeigt ein schematisches Ablaufdiagramm eines Verfahrens zu einem Betrieb einer erfindungsgemäßen Strahleinheit einer Strahlvorrichtung. In einem Voreinstellungsschritt 94a vor einem Strahlschritt 90a werden Parameter manuell, teilautomatisiert und/oder vollautomatiersiert eingerichtet. In einem Voreinstellungsschritt 94a werden die Prozessparameter und das Strahlmittel ausgewählt und/oder eingestellt. Als Prozessparameter werden ein definierter Druck und die Strahldauer eingestellt. Bei einer Auswahl des Strahlmittels wird die Mischung der Strahlkornmaterialien, die Kornform und das Verhältnis einer Partikelmenge zu einem Volumenstrom ausgewählt.

In einem Fixierschritt 92a wird vor dem Strahlschritt 90a das, insbesondere dentale, Werkstück und/oder die Apparatur 14a mittels einer plastischen Masse 48a und/oder manuell und/oder einer Schlinge mit der Werkstückhalteeinheit 46a verbunden. Mittels der Werkstückhalteeinheit 46a wird in einem Fixierschritt 92a eine lösbare Fixierung des, insbesondere dentalen, Werkstücks und/oder der Apparatur 14a erreicht. Das, insbesondere dentale, Werkstück und/oder die Apparatur 14a werden in einem Fixierschritt 92a werkzeuglos an eine Werkstückhalteeinheit fixiert.

In einem Strahlschritt 90a wird das Tast- und/oder Abstandselement 18a zur Einhaltung eines Mindestabstands eingesetzt. Mittels des Fortsatzes 20a des Tast- und/oder Abstandselements 18a wird in einem Strahlschritt 90a ein Mindestabstand der Auslassöffnung des Düsenelements 16a überwacht. Über die Länge des Fortsatzes 20a wird der Mindestabstand festgelegt. Alternativ können Tast- und/oder Abstandselemente 18a mit unterschiedlichen Längen des Fortsatzes 20a für eine Einsatzvariabilität genutzt werden. Über den Mindestabstand wird garantiert, dass die Strahleinheit 10a keine aggressive und/oder zerstörende Wirkung auf die Oberfläche des insbesondere dentalen, Werkstücks und/oder einer Apparatur 14a besitzt. Weiter wird in einem Strahlschritt 90a das Tast- und/oder Abstandselement 18a als Führungshilfe zum Abfahren von Geometrien eingesetzt. Mit dem Tast- und/oder Abstandselement 18a als Führungshilfe wird innerhalb eines Strahlschritts 90a ein gleichbleibender Mindestabstand beim Abfahren einer Geometrie erreicht.

In zumindest einem Strahlschritt 90a werden mittels des Tast- und/oder Abstandselements 18a Geometriedaten während des Abfahrens eines, insbesondere dentalen, Werkstücks und/oder einer Apparatur ermittelt. In einem Strahlschritt 90a werden die Geometriedaten des, insbesondere dentalen, Werkstücks und/oder einer Apparatur mittels eines Abstands und/oder Längenmessungen ermittelt. In einem Strahlschritt 90a werden die Längen und/oder Abstandswerte ermittelt. In einem Strahlschritt 90a werden die Geometriedaten in einem konstanten Abstand ermittelt. In einem Strahlschritt 90a werden Geometriedaten in einem Zeitpunkt ermittelt, in welchem eine Änderung der Geometriedaten auftritt. Alternativ wird in einem Strahlschritt eine dauerhafte Ermittlung der Geometriedaten durchgeführt.

In einem Wartungsschritt 96a wird das Tast- und/oder Abstandselement 18a werkzeuglos ausgetauscht. In einem Wartungsschritt 96a wird eine Abnutzung des Tast- und/oder Abstandselements 18a überwacht und falls notwendig wird das abgenutzte Tast- und/oder Abstandselement 18a durch ein neues Tast- und/oder Abstandselement 18a ausgetauscht. Das Tast- und/oder Abstandselement 18a wird ausgetauscht, wenn eine Abnutzung zu erkennen ist. Alternativ ist auch ein Austausch des Tast- und/oder Abstandselements 18a nach einer definierten Anzahl an Strahlschrittzyklen denkbar. Ferner ist auch ein Austausch nach jedem Strahlschritt 90a denkbar. In einem Wartungsschritt 96a wird die Koppelstelle 28a zwischen dem Tast- und/oder Abstandselement 18a und dem Düsenelement 16a entkoppelt. Infolge des Entkoppelns des abgenutzten Tast- und/oder Abstandselements 18a, wird ein neues Tast- und/oder Abstandselement 18a mit dem Düsenelement 16a gekoppelt.

In einem Qualitätsüberprüfungsschritt 98a wird vor dem Strahlschritt 90a eine Pigmentschicht aufgebracht, wobei in zumindest einem Qualitätsüberprüfungsschritt 98a nicht bestrahlte Oberflächen durch die Pigmentschicht optisch kenntlich dargestellt werden. In einem Qualitätsprüfungsschritt 98a wird ein optischer Unterschied, zwischen einer mittels eines Strahlschrittes 90a bearbeitenden Oberfläche und einer nicht bearbeitenden Oberfläche kenntlich dargestellt. In einem Qualitätsüberprüfungsschritt 98a wird eine Qualität anhand des Prinzips der Elementaraussage bewertet. Weiter wird in einem Qualitätsüberprüfungsschritt 98a nach dem Strahlschritt 90a, das, insbesondere dentale, Werkstück und/oder die Apparatur 14a mittels einer Prüfvorrichtung 50a, insbesondere optische Prüfvorrichtung, bewertet. Mit der Prüfvorrichtung 50a wird ein optischer Unterschied zwischen einer bearbeiteten Oberfläche und einer nicht bearbeiteten Oberfläche verdeutlicht. Ferner können Messdaten mit der Prüfvorrichtung als Datei gesicht werden.

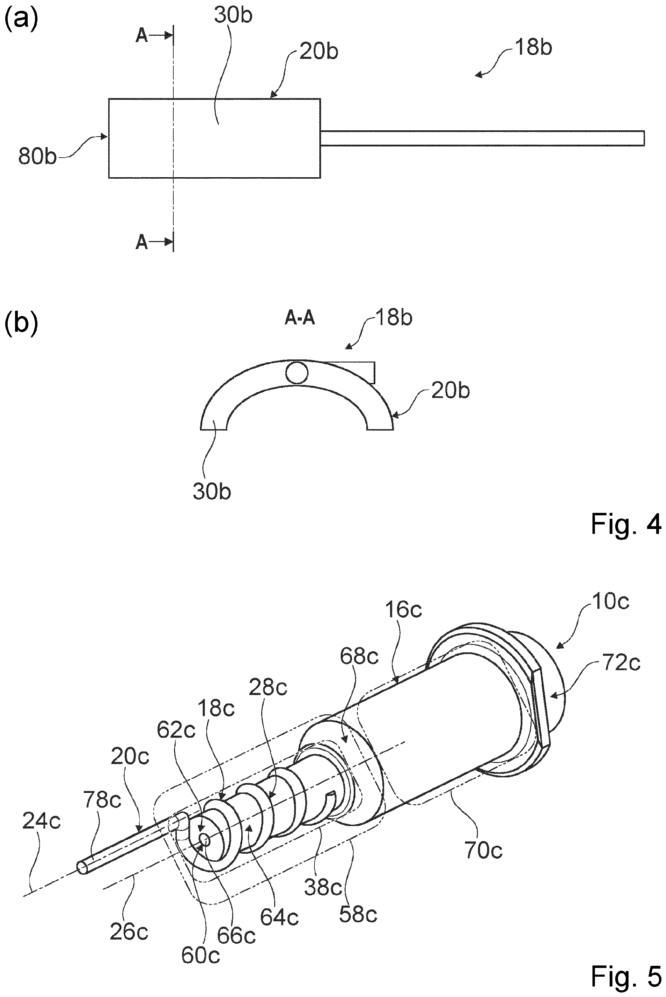

In den Figuren 5 bis 10 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 10 ist der Buchstabe a durch die Buchstaben b bis e ersetzt.

Fig. 5 zeigt eine alternative Strahleinheit 10b mit einem alternativen Tast- und/oder Abstandselement 18b. Das Tast- und/oder Abstandselement 18b weist an einem Ende des Düsenelements 16b einen von dem Düsenelement 16b wegragenden Fortsatz 20b auf. Der Fortsatz 20b ist als ein Abschattungselement 30b für den mittels eines Düsenelements 16b ausgebrachten Strahl ausgebildet. Das Abschattungselement 30b umschließt eine Strahlachse 26b des Düsenelements 16b in einer Ebene senkrecht zu der Strahlachse 26b zumindest teilweise. Alternativ ist auch denkbar, dass das Abschattungselement 30b die Strahlachse 26b des Düsenelements 16b in einer Ebene senkrecht zu der Strahlachse 26b vollständig umschließt. Vorzugsweise weist das Tast- und/oder Abstandselement 18b, insbesondere der Fortsatz 20b des Tast- und/oder Abstandselements 18b, in einem Querschnitt senkrecht zu einer Haupterstreckungsachse eine Halbrohrform auf. Ferner weist das Tast- und/oder Abstandselement 18b, insbesondere der Fortsatz 20b des Tast- und/oder Abstandselements 18b, in einem Querschnitt senkrecht zu einer Haupterstreckungsachse eine Sichelform, eine Halbringform oder dergleichen auf. Alternativ ist auch eine andere, einem Fachmann als sinnvoll erscheinende Querschnittform senkrecht zu einer Haupterstreckungsachse, beispielsweise insbesondere eine Reckteckform, Mehreckform und/oder eine abgewinkelte Form denkbar. Das Abschattungselement 18b ist durch den gesamten Fortsatz 20b gebildet. Alternativ ist das Abschattungselement 18b nur durch einen Teil des Fortsatzes 20b gebildet.

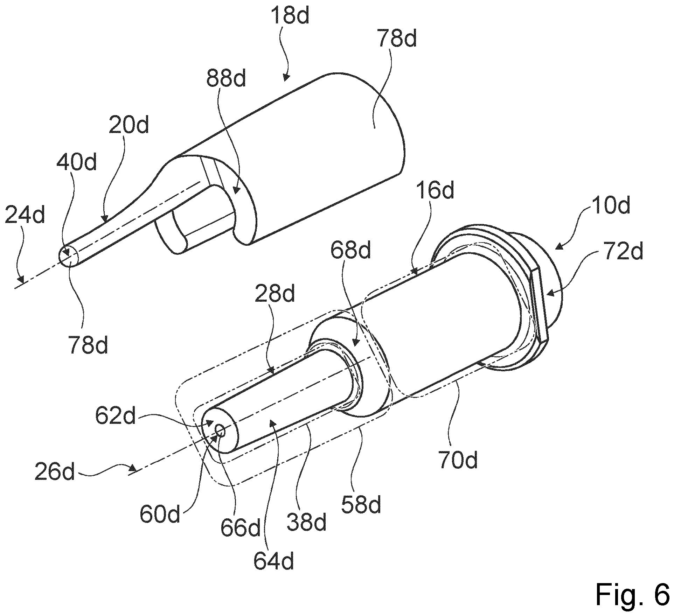

Das Düsenelement 16b bildet einen Strahlkanal 110b aus, welcher einen sich entlang einer Längsachse 112b verändernden Durchmesser aufweist. Der Strahlkanal 110b weist einen mittleren Führungsbereich 114b und einen Austrittsbereich 116b auf, wobei ein Durchmesser des Austrittsbereichs 116b, zumindest gemittelt, größer ist als ein Durchmesser d_{F} des mittleren Führungsbereichs 114b. Der Führungsbereich 114b und der Austrittsbereich 116b sind jeweils von einem axialen Bereich des Strahlkanals 110b gebildet. Der Austrittsbereich 116b ist konisch ausgebildet. Der Austrittsbereich 116b des Strahlkanals 110b weitet sich konisch, insbesondere kegelstumpfförmig, zu einem Austritt 118b hin auf. Der Austrittsbereich 116b ist entlang der Längsachse konisch. Der Strahlkanal 110b weist in dem Austrittsbereich 116b eine Kegelstumpfform auf (Figur 6).

Ferner weist das Düsenelement 16b ein Verstellelement 126b auf, welches zu einer variablen Verstellung einer Kontur des Strahlkanals 110b vorgesehen ist. Das Verstellelement 126b ist in zumindest einem Betriebszustand zu einer variablen Verstellung eines Durchmessers des Austrittsbereichs 116b des Strahlkanals 110b vorgesehen. Alternativ oder zusätzlich wäre auch denkbar, dass mittels des Verstellelements 126b beispielsweise eine Konizität und/oder eine Länge des Austrittsbereichs 116b verändert werden kann. Das Verstellelement 126b ist zu einer mechanischen Verstellung des Austrittsbereichs 116b vorgesehen. Das Verstellelement 126b weist ein Antriebselement 128b zu einer Verstellung einer Kontur des Strahlkanals 110b auf. Das Verstellelement 126b ist beispielhaft zu einer Verstellung der Kontur des Strahlkanals 110b vorgesehen. Das Verstellelement 126b weist beispielhaft eine den Strahlkanal 110b teilweise ausbildende Membran 130b auf, welche von einer dem Strahlkanal 110b abgewandten Rückseite, beispielsweise mittels eines Fluids in seiner Form verändern werden kann. Eine Rückseite kann über das Fluid beispielhaft mit einem Druck beaufschlagt werden, wobei das Antriebselement 128b von einem Druckkolben zu einem Aufbau des Drucks gebildet ist. Auf der Rückseite der Membran 130b ist dazu insbesondere ein Fluidraum 132b angeordnet, der über eine Fluidleitung 134b mit dem als Druckkolben ausgebildeten Antriebselement 128b verbunden ist. Mittels Alternativ oder zusätzlich wäre auch denkbar, dass das Verstellelement 126b einen Irisblendenmechanismus aufweist, über den zumindest ein Durchmesser des Strahlkanals 110b verändert werden kann. Alternativ oder zusätzlich wäre auch denkbar, dass das Verstellelement 126b dazu vorgesehen ist, eine Konizität, insbesondere einen Öffnungswinkel, des Austrittsbereichs 116b zu verändern. Ein Eingangsdurchmesser des Strahlkanals 110b in dem Austrittsbereich 116b bleibt dabei unverändert (Figur 6).

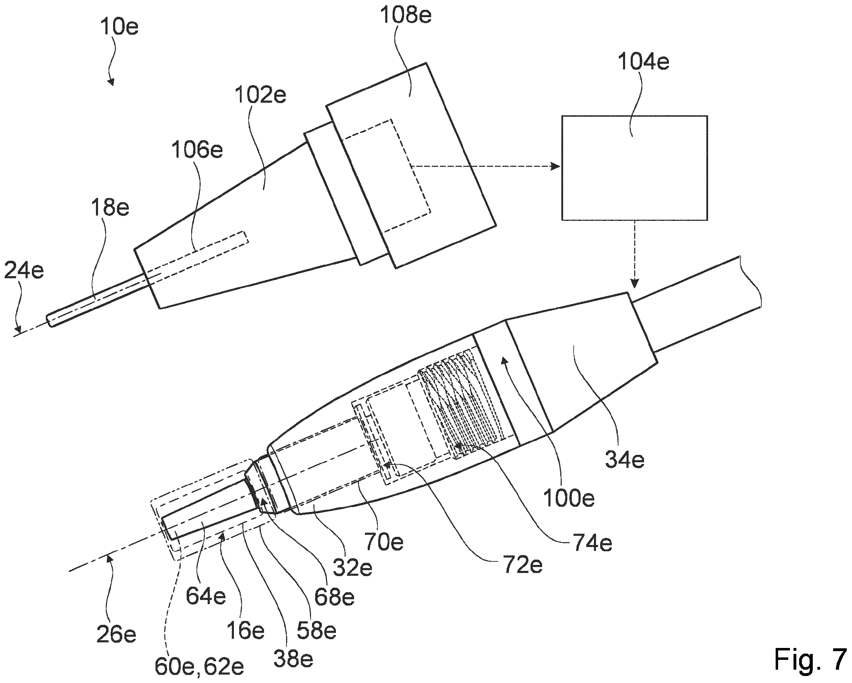

Fig.7 zeigt ein Ausführungsbeispiel einer Strahleinheit 10c, wobei ein Tast- und/oder Abstandselement 18c sich helixartig um ein Düsenelement 16c erstreckt. Das Tast- und/oder Abstandselement 18c weist einen helixartigen Teilbereich auf. Der helixartige Teilbereich des Tast- und/oder Abstandselements 18c ist an einer Außenwandung 64c des Düsenelements 16c angeordnet. Alternativ ist das helixartige Tast- und/oder Abstandselement 18c in einer in dem Düsenelement 16c ausgebildeten Ausnehmung 36c angeordnet. Die Ausnehmung 36c ist helixartig ausgebildet. Der helixartige Teil des Tast- und/oder Abstandselements 18c geht fließend in einen lanzenförmigen Fortsatz 20c über. Das helixartige Tast- und/oder Abstandselement 18c ist über eine Kraft- und/oder Formschluss-Verbindung mit dem Düsenelement 16c fixiert ausgebildet. Das helixartige Tast- und/oder Abstandselement 18c ist lösbar mit dem Düsenelement 16c ausgebildet. Ferner ist das helixartige Tast- und/oder Abstandselement 18c und das Düsenelement 16c über eine Schraubverbindung miteinander fixiert ausgebildet.

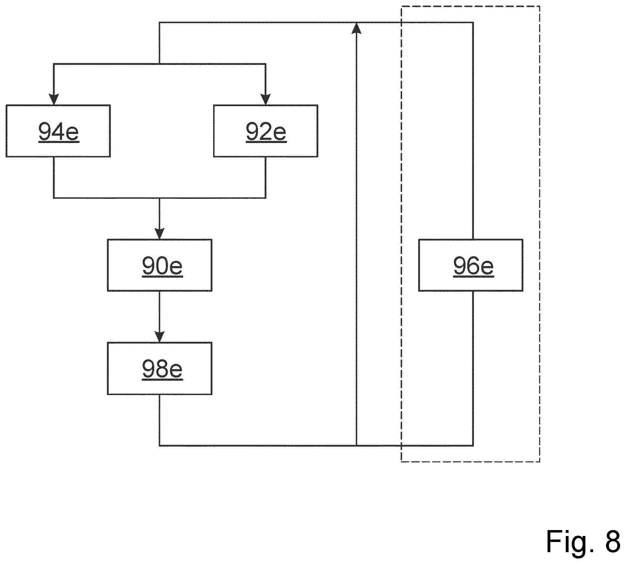

Fig.8 zeigt ein Ausführungsbeispiel einer Strahleinheit 10d, wobei ein Tast- und/oder Abstandselement 18d eine Spitze 38d eines Düsenelements 16d vollflächig in zumindest drei Raumrichtungen, senkrecht zu einer Haupterstreckungsrichtung des Düsenelements 16d umschließt. Das Tast- und/oder Abstandselement 18d ist als zumindest teilweise Mantelfläche einer Zylinderform um das Düsenelement 16d ausgebildet. Alternativ ist denkbar, dass das Tast- und/oder Abstandselement 18d die Spitze 38d des Düsenelements 16d vollständig flächig umgibt. Das Tast- und/oder Abstandselement 18d ist über eine Kraft- und/oder Formschluss-Verbindung mit dem Düsenelement 16d fixiert ausgebildet. Das Tast- und/oder Abstandselement 18d ist über eine Klips- und/oder Steckverbindung an dem Düsenelement 16d fixiert ausgebildet. Der vollflächige Teil des Tast- und/oder Abstandselements 18d geht fließend in einen lanzenförmigen Fortsatz 20d über. Vorzugsweise ist der Fortsatz 20d auf einer Endfläche 88d des vollflächigen Teils 76d des Tast- und/oder Abstandselements 18d in Haupterstreckungsrichtung des Tast- und/oder Abstandselements 18d angeordnet.

Weiter bildet das Tast- und/oder Abstandselement 18d an einem Ende eine Keramikkugel 40d aus, wobei die Keramikkugel 40d in Haupterstreckungsrichtung des Tast- und/oder Abstandselements 18d an der Berührungsfläche mit einem, insbesondere dentalen, Werkstück und/oder einer Apparatur 14d angeordnet ist. Die Keramikkugel 40d ist an einem Ende des Fortsatzes 20d ausgebildet. Die Keramikkugel 40d besitzt denselben Querschnittdurchmesser wie das Ende des Fortsatzes 20d. Alternativ ist auch eine Keramikkugel mit einem größeren Querschnittdurchmesser als das Ende des Fortsatzes denkbar. Das restliche Tast- und/oder Abstandselement ist nicht beschichtet ausgebildet.

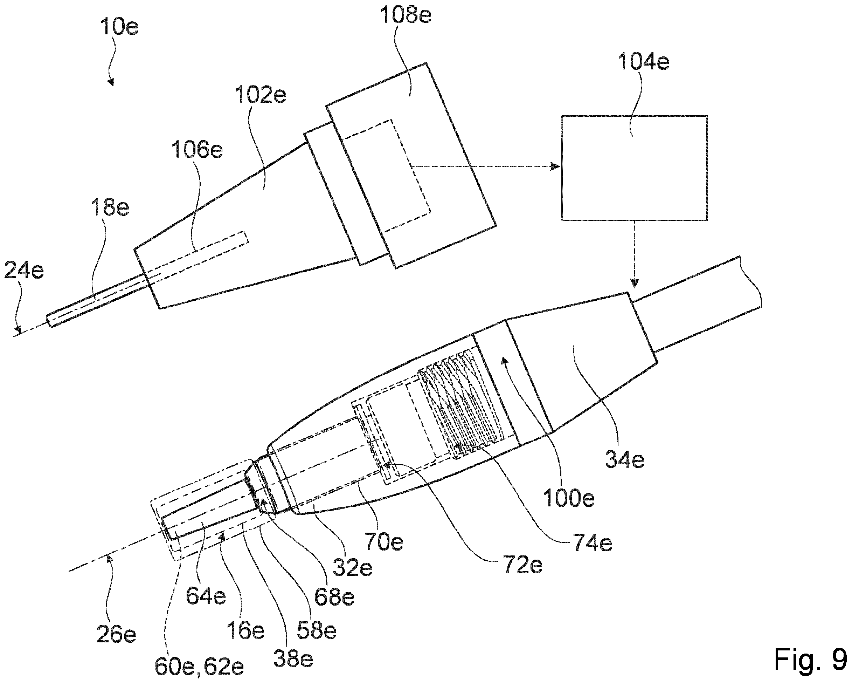

Fig. 9 zeigt ein weiteres alternatives Ausführungsbeispiel eines Tast- und/oder Abstandelements einer Strahleinheit 10e in einer schematischen Darstellung. Ein Tast- und/oder Abstandselement 18e ist entkoppelt von einem Düsenelement 16e ausgebildet Das Tast- und/oder Abstandselement 18e ist beabstandet zum Düsenelement 16e an der Strahleinheit 10e angeordnet. Das Tast- und/oder Abstandselement 18e ist an einem von einer Pistoleneinheit 34e getrennten, separaten Halteelement 102e der Strahleinheit 10e angeordnet. Das Halteelement 102e ist als Tastarm ausgebildet. Das Halteelement 102e ist mit einer CNC-Maschineneinheit 108e verbunden. Bei einer automatisierten Aufrauung einer Oberfläche eines dentalen Werkstücks wird eine Oberfläche, insbesondere eine Kavität des Werkstücks, ohne die Pistoleneinheit 34e, von dem Tast- und/oder Abstandselement 18e abgefahren und erfasst und anschließend, ohne das Tast- und/oder Abstandselement 18e, mittels des Düsenelements 16e bearbeitet. Hierfür werden Geometriedaten an eine Steuerungs- und/oder Regelungseinheit 104e übermittelt und gespeichert. Die gespeicherte Geometriedaten werden mittels der Steuerungs- und/oder Regelungseinheit 104e an das Düsenelement 16e mittels der Pistoleneinheit 34e übermittelt. Eine Bearbeitung der Oberfläche eines dentalen Werkstücks erfolgt infolge anhand der übermittelten Geometriedaten. Das Tast- und/oder Abstandselement 18e bildet eine Koppelstelle 106e mit dem Halteelement 102e aus. Das Halteelement 102e umschließt das Tast- und/oder Abstandselement 18e teilweise. Die Koppelstelle 106e ist lösbar ausgebildet. Die Koppelstelle 106e ist als formschlüssige und/oder kraftschlüssige Koppelstelle 106e ausgebildet. Die Koppelstelle 106e ist werkzeuglos lösbar ausgebildet.

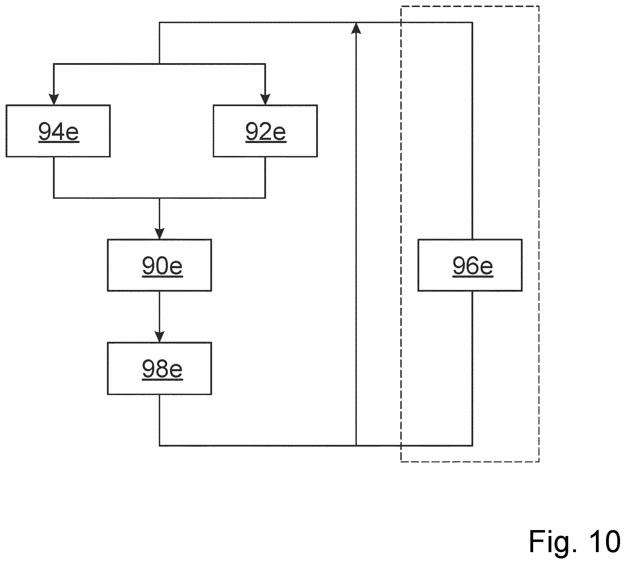

Fig.10 zeigt ein alternatives schematisches Ablaufdiagramm eines Verfahrens zu einem Betrieb einer erfindungsgemäßen Strahleinheit 10e einer Strahlvorrichtung 12e. In diesem alternativen Verfahren wird ein erweiterter Strahlschritt 90e eingeführt. Der Strahlschritt 90e weist die Merkmale des Strahlschritts 90a aus der Figur 3 auf zusätzlich neue Merkmale. Ein Fixierschritt 92e, Voreinstellungsschritt 94e, Wartungsschritt 96e und Qualitätsüberprüfungsschritt 98e erfolgen identisch zu dem Fixierschritt 92a, Voreinstellungsschritt 94a, Wartungsschritt 96a und Qualitätsüberprüfungsschritt 98a der Figur 3.

In zumindest einem Strahlschritt 90e werden die durch das Tast- und/oder Abstandselement 18e ermittelten Geometriedaten an eine Steuerungs- und/oder Regelungseinheit 104e weitergeleitet, wobei mittels der an die Steuerungs- und/oder Regelungseinheit 104e übermittelten Geometriedaten ein automatischer Betrieb durchgeführt wird. In einem Strahlschritt 90e werden die ermittelten Geometriedaten an die Steuerungs- und/oder Regelungseinheit 104e übertragen. In einem Strahlschritt 90e werden die Geometriedaten mittels der Steuerungs- und/oder Regelungseinheit 104e gespeichert. In einem Strahlschritt 90e wird eine automatisierte Bearbeitung durchgeführt, wobei die automatisierte Bearbeitung durch die Steuerungs- und/oder Regelungseinheit 104e anhand der Geometriedaten gesteuert wird. Ferner wird in einem Strahlschritt 90e eine automatisierte Bearbeitung eines, insbesondere dentalen, Werkstücks und/oder einer Apparatur durch die Steuerungs- und/oder Regelungseinheit 104e anhand der gespeicherten Geometriedaten gesteuert.

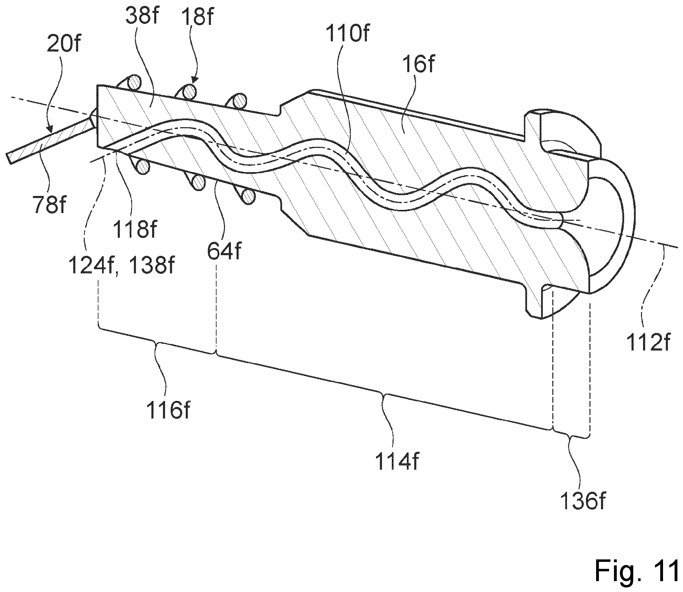

Figur 11 zeigt eine alternative Ausgestaltung eines Düsenelements 16f einer Strahleinheit 10f.

Das Düsenelement 16f bildet einen Strahlkanal 110f aus. Das Düsenelement 16f bildet den Strahlkanal 110f aus, welcher von einer entlang einer Haupterstreckungsrichtung des Düsenelements 16f durchgehenden Ausnehmung gebildet ist. Das Düsenelement 16f begrenzt den Strahlkanal 110f. Ein Ende des Strahlkanals 110f bildet einen Austritt 118f für das Strahlgut, insbesondere den abrasiven Strahl, aus. Das Düsenelement 16f bildet einen Teil eines Handteils der Strahleinheit 10f. Das Düsenelement 16f ist zu einer Beeinflussung der Geschwindigkeit und des statischen Drucks eines Fluids und/oder einer Fluid-Zusatzstoff Mischung vorgesehen. Die Längsachse des Strahlkanals 110f erstreckt sich im Wesentlichen parallel zu der Haupterstreckungsrichtung des Düsenelements 16f.

Der Strahlkanal 110f weist einen zumindest teilweise von einer Gerade verschiedenen, insbesondere gekrümmten, Verlauf auf. Der Strahlkanal 110f weist einen gekrümmten Verlauf auf. Der Strahlkanal 110f weist einen mehrfach gekrümmten Verlauf auf. Vorzugsweise weist eine Mittelachse 124f und/oder eine Mittelfaser 138f des Strahlkanals 110f einen zumindest teilweise von einer Gerade verschiedenen, insbesondere gekrümmten Verlauf auf. Der Verlauf des Strahlkanals 110f weist mehrere entgegengesetzte Krümmungen auf, sodass ein wellenlinienförmiger Verlauf entsteht. Die Krümmungen des Strahlkanals 110f gehen kontinuierlich ineinander über. Es wäre jedoch auch ein anderer, einem Fachmann als sinnvoll erscheinender Verlauf denkbar.

Der Strahlkanal 110f weist einen mittleren Führungsbereich 114f und einen Austrittsbereich 116f auf. Der Führungsbereich 114f und der Austrittsbereich 116f sind jeweils von einem axialen Bereich des Strahlkanals 110f gebildet. Der Austrittsbereich 116f erstreckt sich über zumindest 15% einer axialen Erstreckung des Strahlkanals 110f. Der Austrittsbereich 116f erstreckt sich über zumindest annähernd 25% einer axialen Erstreckung des Strahlkanals 110f. Der Führungsbereich 114f erstreckt sich über zumindest 50% einer axialen Erstreckung des Strahlkanals 110f. Der Strahlkanal 110f weist entlang der Längsachse zusätzlich einen Eintrittsbereich 136f auf. Der Eintrittsbereich 136f grenzt auf einer dem Austrittsbereich 116f abgewandten Seite an den Führungsbereich 114f an. Der Austrittsbereich 116f umfasst den Austritt 118f des Strahlkanals 110f. Der Austrittsbereich 116f erstreckt sich entlang der Längserstreckung von dem Führungsbereich 114f bis zu der Austrittsöffnung des Austritts 118f des Strahlkanals 110f. Der Austritt 118f ist in einer Außenwandung 64f des Düsenelements 16f angeordnet. Der Austritt 118f ist seitlich angeordnet. Der Austritt 118f ist in einem vorderen Bereich des Düsenelements 16f seitlich an der Außenwandung 64f angeordnet.

Der Strahlkanal 110f weist in dem Führungsbereich 114f und in dem Austrittsbereich 116f einen mehrfach gekrümmten Verlauf auf. Der Strahlkanal 110f weist in dem Führungsbereich 114f und in dem Austrittsbereich 116f einen wellenlinienförmigen Verlauf auf.

### Bezugszeichen

- 10: Strahleinheit
- 12: Strahlvorrichtung
- 14: Werkstück und/oder Apparatur
- 16: Düsenelement
- 18: Tast- und/oder Abstandselement
- 20: Fortsatz
- 24: Mittelachse
- 26: Strahlachse
- 28: Koppelstelle
- 30: Abschattungselement
- 32: Halteelement
- 34: Pistoleneinheit
- 36: Ausnehmung
- 38: Spitze
- 40: Keramikkugel
- 42: Beleuchtungseinheit
- 44: Laserelement
- 46: Werkstückhalteeinheit
- 48: Plastische Masse
- 50: Prüfvorrichtung
- 52: Bearbeitungsplatte
- 54: Strahlkammer
- 56: Reinigungs- und Desinfektionseinheit
- 58: Querschnittsverengung
- 60: Auslassöffnung
- 62: Endfläche
- 64: Außenwandung
- 66: Innenwandung
- 68: Abschrägung
- 70: Querschnitt
- 72: Koppelstelle
- 74: Verbindungstelle
- 76: vollflächiger Teil
- 78: Berührungsfläche
- 80: Weitere Ausnehmung
- 82: Lichtleiter
- 84: Lichtquelle
- 86: Strahlguttank
- 88: Endfläche
- 90: Strahlschritt
- 92: Fixierschritt
- 94: Voreinstellungsschritt
- 96: Wartungsschritt
- 98: Qualitätsüberprüfungsschritt
- 100: Mantelfläche
- 102: Halteelement
- 104: Steuerungs- und Regelungseinheit
- 106: Koppelstelle
- 108: CNC-Maschineneinheit
- 110: Strahlkanal
- 112: Längsachse
- 114: Führungsbereich
- 116: Austrittsbereich
- 118: Austritt
- 122: Seitenwand
- 124: Mittelachse
- 126: Verstellelement
- 128: Antriebselement
- 130: Membran
- 132: Fluidraum
- 134: Fluidleitung
- 136: Eintrittsbereich
- 138: Mittelfaser

## Patentansprüche

1. Strahleinheit (10a; 10c; 10d; 10e; 10f) für eine Strahlvorrichtung (12a) , insbesondere Dentalstrahlvorrichtung, welche zu einer Aufrauung einer Oberfläche eines, insbesondere dentalen, Werkstücks und/oder einer Apparatur (14a) vorgesehen ist, mit zumindest einem Düsenelement (16a; 16c; 16d; 16e; 16f), welches zu einem gezielten Ausbringen eines, insbesondere abrasiven, Strahls, insbesondere zu einem Innenstrahlen eines dentalen Werkstücks und/oder einer dentalen Apparatur (14a), vorgesehen ist,
**gekennzeichnet durch**
ein Tast- und/oder Abstandselement (18a; 18b; 18c; 18d; 18e; 18f), welches zur Einhaltung eines Mindestabstands, zwischen einem, insbesondere dentalen, Werkstück und/oder einer Apparatur (14a) und dem zumindest eine Düsenelement (16a; 16c; 16d; 16e; 16f) vorgesehen ist.

2. Strahleinheit (10a; 10c; 10d; 10f) nach Anspruch 1,
**dadurch gekennzeichnet, dass**
das Tast- und/oder Abstandselement (18a; 18b; 18c; 18d; 18f) an einem Ende des Düsenelements (16a; 16c; 16d; 16f) einen von dem Düsenelement (16a; 16c; 16d; 16f) wegragenden Fortsatz (20a; 20b; 20c; 20d; 20f) aufweist, wobei das Tast- und/oder Abstandselement (18a; 18b; 18c; 18d; 18f) teilweise an einer Außenwandung (64a; 64c; 64d) des Düsenelements (16a; 16c; 16d; 16f) angeordnet ist.

3. Strahleinheit (10a; 10c; 10d) nach Anspruch 2,
**dadurch gekennzeichnet, dass**
der Fortsatz (20a; 20b; 20c; 20d) des Tast- und/oder Abstandselements (18a; 18b; 18c; 18d) von einer sich im Wesentlichen parallel zu einer Haupterstreckungsrichtung des Düsenelements (16a; 16c; 16d) erstreckenden Lanze gebildet ist.

4. Strahleinheit (10a; 10c; 10d) zumindest nach Anspruch 2,
**dadurch gekennzeichnet, dass**
der Fortsatz (20a; 20b; 20c; 20d) des Tast- und/oder Abstandselements (18a; 18b; 18c; 18d) eine Mittelachse (24a; 24c; 24d) aufweist, welche sich zumindest im Wesentlichen parallel zu einer Haupterstreckungsrichtung des Düsenelements (16a; 16c; 16d) erstreckt, wobei die Mittelachse (24a; 24c; 24d) des Fortsatzes (20a; 20b; 20c; 20d), insbesondere der gesamte Fortsatz (20a; 20b; 20c; 20d), beabstandet von einer Strahlachse (26a; 26c; 26d) des Düsenelements (16a; 16c; 16d) angeordnet ist.

5. Strahleinheit (10a; 10c; 10d; 10f) nach einem der vorhergehenden Ansprüche,
**dadurch gekennzeichnet, dass**
das Tast- und/oder Abstandselement (18a; 18b; 18c; 18d; 18f) eine Koppelstelle (28a; 28c; 28d) mit dem Düsenelement (16a; 16c; 16d; 16f) aufweist.

6. Strahleinheit (10a; 10c; 10d) nach einem der vorhergehenden Ansprüche,
**dadurch gekennzeichnet, dass**
die Koppelung zwischen dem Tast- und/oder Abstandselement (18a; 18b; 18c; 18d; 18f) und dem Düsenelement (16a; 16c; 16d; 16f) an der Koppelstelle (28a; 28c; 28d) als eine lösbare Verbindung ausgebildet ist.

7. Strahleinheit (10a; 10c; 10d) nach einem der vorhergehenden Ansprüche,
**dadurch gekennzeichnet, dass**
das Tast- und/oder Abstandselement (18a; 18b; 18c; 18d) an einem Ende des Düsenelements (16a; 16c; 16d) einen von dem Düsenelement (16a; 16c; 16d) wegragenden Fortsatz (20a; 20b; 20c; 20d) aufweist, wobei der Fortsatz (20a; 20b; 20c; 20d) als ein Abschattungselement (30b) für den mittels des Düsenelements (16a; 16c; 16d) ausgebrachten Strahl ausgebildet ist, wobei das Abschattungselement (30b) eine Strahlachse (26a; 26c; 26d) des Düsenelements (16a; 16c; 16d) in einer Ebene senkrecht zu der Strahlachse (26a; 26c; 26d) zumindest teilweise umschließt.

8. Strahleinheit (10a; 10c; 10d) nach einem der vorhergehenden Ansprüche,
**gekennzeichnet durch**
ein Halteelement (32a), wobei das Tast- und/oder Abstandselement (18a; 18b; 18c; 18d) mittels des Halteelements (32a) lösbar an dem Düsenelement (16a; 16c; 16d) fixiert ausgebildet ist, wobei das Halteelement (32a) dazu vorgesehen ist, mittels einer Schraubverbindung eine lösbare Verbindung mit einer Pistoleneinheit (34a) der Strahleinheit (10a; 10c; 10d) auszubilden.

9. Strahleinheit (10a; 10c; 10d) nach Anspruch 8,
**dadurch gekennzeichnet, dass**
die Düseneinheit (16a; 16c; 16d) eine Ausnehmung (36a) aufweist, in welcher das Tast- und/oder Abstandselement (18a; 18b; 18c; 18d) angeordnet ist.

10. Strahleinheit (10a; 10c; 10d; 10f) nach einem der Ansprüche 1 bis 7,
**dadurch gekennzeichnet, dass**
das Tast- und/oder Abstandselement (18a; 18b; 18c; 18d; 18f) sich helixartig um das Düsenelement (16a; 16c; 16d; 16f) erstreckt.

11. Strahleinheit (10a; 10c; 10d) nach einem der Ansprüche 1 bis 7,
**dadurch gekennzeichnet, dass**
das Tast- und/oder Abstandselement (18a; 18b; 18c; 18d), die Spitze (38a; 38c; 38d) des Düsenelements (16a; 16c; 16d) vollflächig in zumindest drei Raumrichtungen, senkrecht zu einer Haupterstreckungsrichtung des Düsenelements (16a; 16c; 16d) umschließt.

12. Strahleinheit (10a; 10c; 10d; 10e; 10f) nach Anspruch 1,
**dadurch gekennzeichnet, dass**
das Tast- und/oder Abstandselement (18a; 18b; 18c; 18d; 18e; 18f) entkoppelt von dem Düsenelement (16a; 16c; 16d; 16e; 16f) ausgebildet ist.

13. Strahleinheit (10a; 10c; 10d; 10e) nach einem der vorhergehenden Ansprüche,
**dadurch gekennzeichnet, dass**
das Tast- und/oder Abstandselement (18a; 18b; 18c; 18d; 18e) eine Beschichtung aufweist.

14. Strahleinheit (10a; 10c; 10d; 10e) nach einem der vorhergehenden Ansprüche,
**dadurch gekennzeichnet, dass**
das Tast- und/oder Abstandselement (18a; 18b; 18c; 18d; 18e) an einem Ende eine Keramikkugel (18a; 18b; 18c; 18d; 18e) ausbildet, wobei die Keramikkugel (40) in Haupterstreckungsrichtung des Tast- und/oder Abstandselements (18a; 18b; 18c; 18d, 18e) an der Berührungsfläche mit einem, insbesondere dentalen, Werkstück und/oder einer Apparatur (14a) angeordnet ist.

15. Strahleinheit (10a; 10c; 10d; 10e) nach einem der vorhergehenden Ansprüche,
**dadurch gekennzeichnet, dass**
die Strahleinheit (10a; 10c; 10d; 10e) eine Beleuchtungseinheit (42a) aufweist.

16. Strahleinheit (10a; 10c; 10d; 10e) nach einem der vorhergehenden Ansprüche,
**dadurch gekennzeichnet, dass**
die Beleuchtungseinheit (42a) im Nahbereich des Abstandelements (18a; 18b; 18c; 18d; 18e) angeordnet ist.

17. Strahleinheit (10a; 10c; 10d,, 10e) nach Anspruch 15,
**dadurch gekennzeichnet, dass**
die Beleuchtungseinheit (42a) zumindest teilweise durch das Tast- und/oder Abstandselement (18a; 18b; 18c; 18d; 18e) ausgebildet ist, wobei das Tast- und/oder Abstandselement (18a; 18b; 18c; 18d; 18e) teilweise als Lichtleiter (84a; 84e) ausgebildet ist.

18. Strahleinheit (10a; 10c; 10d) nach einem der vorhergehenden Ansprüche,
**dadurch gekennzeichnet, dass**
die Strahleinheit (18a; 18b; 18c; 18d) ein Laserelement (44a) umfasst, welches dazu vorgesehen ist, mit überlagerten Laserstrahlen eine Geometrie abzufahren.

19. Strahleinheit (10a; 10b; 10f) nach dem Oberbegriff des Anspruchs 1, insbesondere nach einem der vorhergehenden Ansprüche,
**dadurch gekennzeichnet, dass**
das Düsenelement (16a; 16b; 16f) einen Strahlkanal (110a; 110b; 110f) ausbildet, welcher einen sich entlang einer Längsachse (112a; 112b; 112f) verändernden Durchmesser und/oder einen zumindest teilweise von einer Gerade verschiedenen, insbesondere gekrümmten Verlauf aufweist.

20. Strahleinheit (10a; 10b) nach Anspruch 19,
**dadurch gekennzeichnet, dass**
der Strahlkanal (110a; 110b) zumindest einen mittleren Führungsbereich (114a; 114b) und einen Austrittsbereich (116a; 116b) aufweist, wobei ein Durchmesser des Austrittsbereichs (116a; 116b), zumindest gemittelt, größer ist als ein Durchmesser (d_{F}) des mittleren Führungsbereichs (114a; 114b).

21. Strahleinheit (10a; 10b) nach Anspruch 20,
**dadurch gekennzeichnet, dass**
der mittlere Führungsbereich (114a; 114b) einen gleichbleibenden Durchmesser (d_{F}) aufweist und sich der Austrittsbereich (116a; 116b) konisch, insbesondere kegelstumpfförmig, zu einem Austritt (118a; 118b) hin aufweitet.

22. Strahleinheit (10a; 10b) zumindest nach Anspruch 20,
**dadurch gekennzeichnet, dass**
eine Seitenwand (122a; 122b) des Austrittsbereichs (116a; 116b) des Strahlkanals (110a; 110b) gegenüber einer Mittelachse (124a; 124b) des Strahlkanals (110a; 110b) einen Winkel von zumindest 2° aufweist.

23. Strahleinheit (10a; 10b) zumindest nach Anspruch 20,
**dadurch gekennzeichnet, dass**
sich der Austrittsbereich (116a; 116b) über zumindest 15% einer axialen Erstreckung des Strahlkanals (110a; 110b) erstreckt.

24. Strahleinheit (10b) zumindest nach Anspruch 19,
**dadurch gekennzeichnet, dass**
das Düsenelement (16b) zumindest ein Verstellelement (126b) aufweist, welches zu einer variablen Verstellung einer Kontur des Strahlkanals (110b) vorgesehen ist.

25. Strahleinheit (10b) nach Anspruch 24,
**dadurch gekennzeichnet, dass**
das Verstellelement (126b) in zumindest einem Betriebszustand zu einer variablen Verstellung eines Durchmessers des Austrittsbereichs (116b) des Strahlkanals (110b) vorgesehen ist.

26. Strahleinheit (10f) zumindest nach Anspruch 19,
**dadurch gekennzeichnet, dass**
der Strahlkanal (110f) einen gekrümmten, insbesondere einen mehrfach gekrümmten Verlauf aufweist.

27. Tast- und/oder Abstandselement (18a; 18b; 18c; 18d; 18e; 18f) einer Strahleinheit (10a; 10c; 10d; 10e) nach einem der vorhergehenden Ansprüche.

28. Strahlvorrichtung (12a), insebsondere Dentalstrahlvorrichtung, mit zumindest einer Strahleinheit (10a; 10c; 10d; 10e; 10f) nach einem der vorhergehenden Ansprüche und mit zumindest einer Werkstückhalteeinheit (46a), welche zu einer Fixierung des zumindest einen Werkstücks und/oder der Apparatur (14a) während eines Strahlvorgangs ausgebildet ist.

29. Verfahren zu einem Betrieb einer Strahleinheit (10a; 10c; 10d; 10e ; 10f) einer Strahlvorrichtung (12a), insbesondere Dentalstrahlvorrichtung, nach einem der Ansprüche 1 bis 25,
**dadurch gekennzeichnet, dass**
in zumindest einem Strahlschritt (90a) das Tast- und/oder Abstandselement (18a; 18b; 18c; 18d; 18e) zur Einhaltung eines Mindestabstands eingesetzt wird.

30. Verfahren nach Anspruch 29,
**dadurch gekennzeichnet, dass**
in zumindest einem Wartungsschritt (96a) das Tast- und/oder Abstandselement (18a; 18b; 18c; 18d; 18e) werkzeuglos ausgetauscht wird.

31. Verfahren nach Anspruch 29,
**dadurch gekennzeichnet, dass**
in zumindest einem Voreinstellungsschritt (94a) insbesondere vor dem Strahlschritt (90a), Parameter manuell, teilautomatisiert und/oder vollautomatisiert eingerichtet werden.

32. Verfahren nach Anspruch 29,
**dadurch gekennzeichnet, dass**
in zumindest einem Strahlschritt (90a) das Tast- und/oder Abstandselement (18a; 18b; 18c; 18d; 18e) als Führungshilfe zum Abfahren von Geometrien eingesetzt wird.

33. Verfahren nach Anspruch 31,
**dadurch gekennzeichnet, dass**
in zumindest einem Strahlschritt (90a) mittels des Tast- und/oder Abstandselements (18a; 18b; 18c; 18d; 18e) Geometriedaten während des Abfahrens eines, insbesondere dentalen, Werkstücks und/oder einer Apparatur ermittelt werden.

34. Verfahren nach Anspruch 32,
**dadurch gekennzeichnet, dass**
in zumindest einem Strahlschritt (90a; 90e) die durch das Tast- und/oder Abstandselement (18a; 18b; 18c; 18d; 18e) ermittelten Geometriedaten an eine Steuerungs- und/oder Regelungseinheit (104a; 104e) weitergeleitet werden, wobei mittels der an die Steuerungs- und/oder Regelungseinheit (104a; 104e) übermittelten Geometriedaten ein automatischer Betrieb durchgeführt wird.

35. Verfahren nach Anspruch 29,
**dadurch gekennzeichnet, dass**
in zumindest einem Fixierschritt (92a), insbesondere vor dem Strahlschritt (90a), das, insbesondere dentale, Werkstück und/oder die Apparatur (14a) mittels einer plastischen Masse (48a) und/oder manuell und/oder einer Schlinge mit der Werkstückhalteeinheit (46a) verbunden wird.

36. Verfahren nach Anspruch 29,
**dadurch gekennzeichnet, dass**
in zumindest einem Qualitätsüberprüfungsschritt (98a), insbesondere vor dem Strahlschritt (90a), eine Pigmentschicht aufgebracht wird, wobei in zumindest einem Qualitätsüberprüfungsschritt (98a) nicht bestrahlte Oberflächen durch die Pigmentschicht optisch kenntlich dargestellt werden.

37. Verfahren nach Anspruch 29,
**dadurch gekennzeichnet, dass**
in zumindest einem Qualitätsüberprüfungsschritt (98a), insbesondere nach dem Strahlschritt (90a), das, insbesondere dentale, Werkstück und/oder die Apparatur (14a) mittels einer Prüfvorrichtung (50a), insbesondere optische Prüfvorrichtung, bewertet wird,

38. Prüfvorrichtung (50a) zur Duchführung eines Qualitätsüberprüfungsschritts (98a) nach einem der Ansprüche 36 und 37,
**dadurch gekennzeichnet, dass**
die Prüfvorrichtung (50a) mittels einer optischen Prüfvorrichtung ausgebildet ist.
